# EUROPEAN PATENT APPLICATION

(11) **EP 3 176 741 A1**
(43) Date of publication of application: **07.06.2017**
(21) Application number: 16201608.3
(22) Date of filing: 01.12.2016
(51) Int. Cl.: G06Q 20/38, G06Q 20/02

(54) **TOKENISATION IN CARDHOLDER - NOT - PRESENT TRANSACTIONS**

(30) Priority: 02.12.2015 GB 201521304
(71) Applicant: Eckoh UK Limited, Hertfordshire HP3 9HN (GB)
(72) Inventor: ROSS, Cameron Peter Sutherland, St Albans, Hertfordshire AL1 4TP (GB); HEATH, James, Hove, Sussex BN3 6NR (GB); BRIDEN, Thomas Edward, Leighton Buzzard, LU7 2AR (GB)
(74) Representative: Fraser, Karen

(57) **Abstract**

An embodiment of the present invention relates to a method of processing signals in a payment transaction. At a processor, telephonic signals conveying sensitive and non-sensitive information are received. The processor detects sensitive information conveyed by the received telephonic signals and sends the sensitive information to a token service provider. The token service provider is communicatively coupled to a payment transaction entity and configured to generate surrogate information for the sensitive information. The processor receives surrogate information from the token service provider, the surrogate information having been generated by the token service provider. The processor then outputs the received surrogate information to a transaction handling centre such that the sensitive information is not provided to the transaction handling centre. At the transaction handling centre, the surrogate information is included in a transaction request message and the transaction request message is sent to the payment transaction entity. At the payment transaction entity, the surrogate information comprised within the transaction request message is sent to the token service provider. Finally, the sensitive information is received at the payment transaction entity for use in the payment transaction, the sensitive information having been retrieved by the token service provider upon receipt of the surrogate information.

## Description

### FIELD OF THE INVENTION

Embodiments of the disclosure herein describe methods and devices for protecting customer information in cardholder-not-present transactions, including transactions involving contact centres and web-based transactions.

### BACKGROUND OF THE INVENTION

Companies often collect, store or otherwise process information concerning individuals in order to provide services and products. Many countries have enacted laws that regulate how such information is to be treated or may be used. In addition, some industry bodies prescribe codes of conduct and standards with which their members must comply. One such industry body is the Payment Card Industry Security Standards Council (PCI SSC). It administers the Data Security Standard (PCI DSS), a framework for the secure handling of cardholder data. PCI DSS compliance requirements apply to all system components that are included in, or connected to, the cardholder data environment (i.e. that part of the network which stores, processes or transmits cardholder data), including network components, servers and applications. These compliance requirements apply to communications for card-present transactions (when the payment card is presented at a point of sale (POS) terminal at a merchant premises), as well as cardholder-not-present transactions (when a transaction is made online or over the telephone via a web payment portal or a call centre assistant).

Consequently, in recent years, a common goal for contact centre or interactive voice response (IVR) operators has been to remove sensitive data, such as credit card data, from their environment. By doing so, the potential for contact centre agent fraud is removed, and a company's security or compliance costs are reduced.

In order to ensure that the contact centre is PCI DSS compliant and tackle fraud and security concerns, the contact centre industry presently uses specialist products, including approaches defined in prior art such as patents GB2478916 and US9178974 (Eckoh), patent application GB2497940 (Eckoh) and patent GB2473376 (Semafone). Methods such as these may partially or fully remove sensitive data from a contact centre or IVR system, but each requires some level of configuration or integration with the contact centre IT or payment systems. In some cases, an existing contact centre payment system must be replaced entirely.

Further, in outsourcing environments, it is possible that no existing approach may be able to completely remove sensitive data from the contact centre environment. A common approach in the contact centre industry is for third-party 'outsourcers' to collect sensitive data on behalf of the ultimate merchant company. In such situations, customers pass sensitive data (such as their credit card details) to the intermediary 'outsourcer', who then pass it on the merchant.

Many merchants require their paid outsourcer to adopt and utilise the merchant's ordering or payment systems. The outsourcer has no control over the ordering or payment system, and cannot change it in any way. Further, some merchants establish a proprietary secure data link between the merchant and outsourcer systems, to protect the customer's sensitive data in transit.

To remove all sensitive data from its environment, an outsourcer may require a merchant to alter the merchant's payment or ordering systems, or communications protocols. This can be very difficult, and sometimes impossible, to achieve.

Merchants typically outsource to multiple providers at the same time, and can be reluctant to make changes specific to any one outsourcer. Conversely, any outsourcer may serve multiple merchants, and may wish to find a single approach for removing sensitive data, without having to engage all their merchant clients to accomplish this.

As a result of these difficulties, contact centre operators, and particularly those which act as outsourcing providers, can presently struggle with internal fraud and compliance concerns.

Hence a generic approach is needed; one which does not require integration with or changes to existing contact centre IT or payment processes, and one which can be implemented at an outsourcer without recourse to each of its paying merchants. Such an approach would reduce fraud and compliance costs for the contact centre and IVR operator.

### SUMMARY OF THE INVENTION

An embodiment of the present invention relates to a method of processing signals in a payment transaction. At a processor, telephonic signals conveying sensitive and non-sensitive information are received. The processor detects sensitive information conveyed by the received telephonic signals and sends the sensitive information to a token service provider. The token service provider is communicatively coupled to a payment transaction entity and configured to generate surrogate information for the sensitive information. The processor receives surrogate information from the token service provider, the surrogate information having been generated by the token service provider. The processor then outputs the received surrogate information to a transaction handling centre such that the sensitive information is not provided to the transaction handling centre. At the transaction handling centre, the surrogate information is included in a transaction request message and the transaction request message is sent to the payment transaction entity. At the payment transaction entity, the surrogate information comprised within the transaction request message is sent to the token service provider. Finally, the sensitive information is received at the payment transaction entity for use in the payment transaction, the sensitive information having been retrieved by the token service provider upon receipt of the surrogate information.

Another embodiment of the present invention comprises a further method of processing signals in a payment transaction, in which the signals originate from a customer device and are addressed to a transaction handling centre. Signals originating from the customer device are redirected to an address of a processor. The signals convey sensitive and non-sensitive information. At the processor, the redirected signals are received. The processor detects sensitive information conveyed by the received signals and sends the sensitive information to a token service provider. The token service provider is communicatively coupled to a payment transaction entity and configured to generate surrogate information for the sensitive information. The processor receives surrogate information from the token service provider, the surrogate information having been generated by the token service provider. The processor then outputs the received surrogate information to a transaction handling centre such that the sensitive information is not provided to the transaction handling centre. At the transaction handling centre, the surrogate information is included in a transaction request message and the transaction request message is sent to the payment transaction entity. At the payment transaction entity, the surrogate information comprised within the transaction request message is sent to the token service provider. Finally, the sensitive information is received at the payment transaction entity for use in the payment transaction, the sensitive information having been retrieved by the token service provider upon receipt of the surrogate information.

An additional embodiment of the present invention relates to a processor for processing signals in a payment transaction. The processor comprises signal monitoring means operable to receive telephonic signals conveying sensitive and non-sensitive information and detect sensitive information conveyed by the received telephonic signals. The processor also comprises a token service provider interface operable to send the sensitive information to a token service provider, the token service provider being communicatively coupled to a payment transaction entity and configured to generate surrogate information for the sensitive information. The token service provider interface receives surrogate information from the token service provider, the surrogate information having been generated by the token service provider. In addition, the processor comprises signal outputting means operable to output the received surrogate information to a transaction handing centre such that the sensitive information is not provided to the transaction handling centre, the transaction handling centre being operable to include the surrogate information in a transaction request message and send the transaction request message to the payment transaction entity. The payment transaction entity to which the transaction request message is sent is operable to send the surrogate information comprised within the transaction request message to the token service provider and receive the sensitive information for use in the payment transaction, the sensitive information having been retrieved by the token service provider upon receipt of the surrogate information.

A further embodiment of the present invention relates to a processor for processing signals in a payment transaction in which the signals originate from a customer device and are addressed to a transaction handling centre. The processor comprises signal monitoring means operable to receive signals originating from the customer device and having been redirected to an address of the processor prior to receipt, the signals conveying sensitive and non-sensitive information. The signal monitoring means is also operable to detect sensitive information conveyed by the received signals. The processor also comprises a token service provider interface operable to send the sensitive information to a token service provider, the token service provider being communicatively coupled to a payment transaction entity and configured to generate surrogate information for the sensitive information. The token service provider interface receives surrogate information from the token service provider, the surrogate information having been generated by the token service provider. In addition, the processor comprises signal outputting means operable to output the received surrogate information to a transaction handing centre such that the sensitive information is not provided to the transaction handling centre, the transaction handling centre being operable to include the surrogate information in a transaction request message and send the transaction request message to the payment transaction entity. The payment transaction entity to which the transaction request message is sent is operable to send the surrogate information comprised within the transaction request message to the token service provider and receive the sensitive information for use in the payment transaction, the sensitive information having been retrieved by the token service provider upon receipt of the surrogate information.

### BRIEF DESCRIPTION OF DRAWINGS

Figure 1 shows a schematic diagram of a known contact centre environment.
Figure 2 shows a schematic diagram of a known contact centre outsourcing environment.
Figure 3 shows a schematic diagram of a contact centre environment, according to one described embodiment.
Figure 4 shows a schematic diagram of a contact centre outsourcing environment, according to one described embodiment.
Figure 5 shows a schematic diagram of a contact centre environment comprising a call processor located within a contact centre, according to one described embodiment.
Figure 6 shows a schematic diagram of a contact centre outsourcing environment comprising a call processor located within the contact centre, according to one described embodiment.
Figure 7 shows a schematic diagram of a call processor, according to one described embodiment.
Figure 8 shows a schematic diagram of a known web-based transaction environment.
Figure 9 shows a schematic diagram of a web-based transaction environment comprising an intermediary processor, according to one described environment.
Figure 10 shows a schematic diagram of a web-based transaction environment comprising an intermediary processor located within a merchant centre, according to one described environment.
Figure 11 shows a schematic diagram of an intermediary processor, according to one described embodiment.
Figures 12A and 12B show a method of protecting customer information in a transaction involving a contact centre, according to one described embodiment.
Figures 13A and 13B show a method of protecting customer information in a web-based transaction, according to one described embodiment.
Figures 14A and 14B show an alternative method of protecting customer information in a transaction involving a contact centre, according to one described embodiment.
Figures 15A and 15B show an alternative method of protecting customer information in web-based transaction, according to one described embodiment.
Figures 16A and 16B show a method of protecting customer information in a repeat transaction involving a contact centre, according to one described embodiment.
Figures 17A and 17B show a method of protecting customer information in a repeat web-based transaction, according to one described embodiment.
Figure 18 shows a schematic diagram of a call processor comprising a TSP, according to one described embodiment.
Figure 19 shows a schematic diagram of an intermediary processor comprising a TSP, according to one described embodiment.
Figure 20 shows a schematic diagram of a call processor comprising a TSP and a payment service provider (PSP), according to one described embodiment.
Figure 21 shows a schematic diagram of an intermediary processor comprising a TSP and a PSP, according to one described embodiment.

### DETAILED DESCRIPTION

Specific embodiments will now be described, by way of example only and with reference to the accompanying drawings having the figure numbers as listed above.

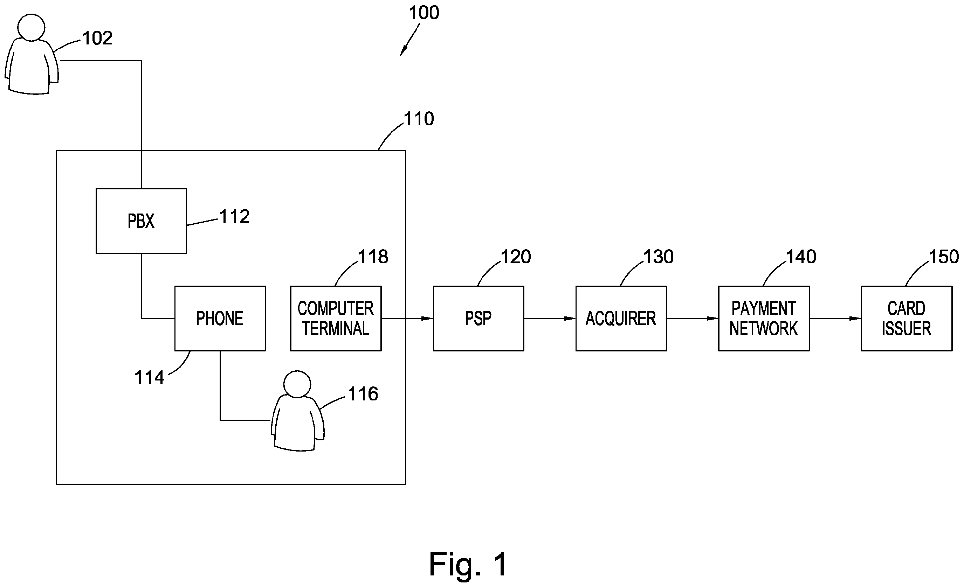

A schematic diagram of a known contact centre environment 100 is shown in Figure 1. A call from a customer 102 is routed to the contact centre 110 of a merchant, where it is switched by private branch exchange (PBX) 112 to a phone 114 of one of a number of contact centre agents 116 (only one contact centre agent 116 is shown for clarity). Each contact centre agent 116 operates a computer terminal 118. The customer 102 provides sensitive information, such as payment information, which is then input at the computer terminal 118 of the contact centre agent 116.

The sensitive information is then relayed, using a payment service provider (PSP) 120, to an acquirer 130. The PSP 120 provides a single interface to the merchant, enabling the merchant to accept a variety of different payment methods, for example credit cards, digital wallets, and alternative payment methods such as bank transfers and direct debits. The PSP 120 may be able to collect payments intended for the merchant and streamline these payments for simplified management. The PSP 120 may further be able to contract with the acquirer 130 used by the merchant. Alternatively, the merchant may contract directly with the acquirer 130.

The role of the acquirer 130 is to process transactions on behalf of the merchant. In effect, the acquirer 130 manages the merchant's bank account. The acquirer 130 passes sensitive information, via a payment network 140, to a card issuer 150 for authorisation and arranges payment for the merchant. As described above, these payments may be collected by the PSP 120 for streamlined payment to the merchant.

The payment network 140 manages and controls the operation and clearing of transactions. The payment network 140 passes sensitive information from the acquirer 130 to the card issuer 150 and passes payments back to the acquirer 130 so that the merchant can receive payment. Payment networks 140 include Visa, MasterCard and American Express, among others, and may also include networks processing so-called "on us" transactions where the acquirer 130 and card issuer 150 are the same entity.

The card issuer 150 provides a payment card to the cardholder on behalf of the payment network 140. Therefore, the sensitive information provided by the customer 102 is the information relating to the card issued by the card issuer 150. The card issuer 150 is responsible for transactions made using the card issued to the customer 102. The card issuer 150 can generate an authorisation response either authorising or declining a transaction initiated by the customer 102 and can debit the customer's account accordingly.

The authorisation response from the card issuer 150 is passed back, via the payment network 140, acquirer 130 and PSP 120, to the contact centre agent's computer terminal 118. The contact centre agent 116 then informs the customer 102 of whether payment has been made successfully. The exchange between the customer 102 and contact centre agent 116 may be recorded, for training purposes. Alternatively, the functions of the PBX 112, phone 114, contact centre agent 116 and agent's computer terminal 118 may be performed by an IVR system (not shown).

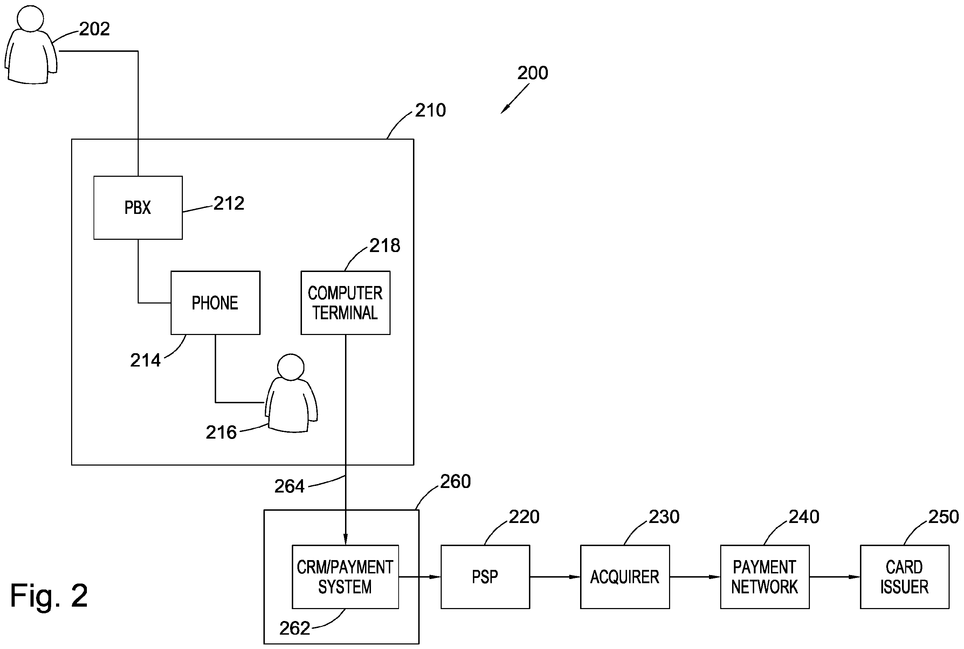

As stated above, difficulties in compliance with PCI DSS requirements are exacerbated in outsourcing environments. Such a known contact centre outsourcing environment 200 is shown in Figure 2. This differs from the contact centre environment described above with respect to Figure 1 in that the sensitive information input at the computer terminal 218 of the contact centre agent 216 or using the IVR system is passed to a merchant system 262 hosted within a separate merchant centre 260. The merchant system 262 may, for example, be a payment system or a customer relationship management (CRM) system. The sensitive information may be passed to the merchant system 262 using a proprietary secure data link 264, which protects the customer's sensitive information. The sensitive information may then be relayed using the PSP 220, with the transaction proceeding as described above with reference to Figure 1. The response from the card issuer 250 may be passed back to the contact centre agent 216 or IVR system via the merchant centre 260.

As noted above, customer information may be stored within a contact centre environment in recordings of transactions carried out by a contact centre agent or IVR system in communication with a customer. In a 'cardholder-not-present' (CNP) transaction, the sensitive data provided by the customer falls into two categories as defined under the PCI DSS. The first category is cardholder data, which may include the PAN and expiry date. The customer's PAN may be stored within a contact centre environment after authorisation of the transaction on the condition that this information is encrypted. The second category of sensitive data is sensitive authentication data (SAD), which may include the CV2 data printed on the reverse of the customer's card. This data may also be termed CVV2, CVC2, CID, CAV2, or CSC data; however the term CV2 data will be used herein to refer to any of the foregoing validation information. SAD must not be stored after authorisation. While encryption of the PAN and prohibiting storage of the CV2 data reduce the risk of external access to a customer's sensitive information, it leaves open the possibility of this information being recorded by a contact centre agent or otherwise misused by personnel operating within the contact centre environment.

Therefore, there is a need to maintain the security of cardholder information in CNP transactions, such as the transactions outlined above in Figures 1 and 2.

Tokenisation in payment transactions has recently become a viable approach to protecting customer card data to provide increased protection against fraud. Tokenisation has arisen out of a need to minimise unauthorised use of cardholder account data. The EMVCo Payment Tokenisation Specification provides a detailed technical specification for payment tokenisation solutions and defines the requirements of a token service provider (TSP). Embodiments of the present invention are described below with reference to the requirements detailed in the EMVCo Payment Tokenisation Specification. However, it will be appreciated by persons skilled in the art that these embodiments may be equally applicable to other standards and specifications defining the requirements of tokenisation in payment transactions. Additionally, the capabilities of certain entities in embodiments described below may not be consistent with present requirements of current standards; however it will be appreciated by persons skilled in the art that developments in the field of payment tokenisation solutions may result in the introduction of alternative standards and requirements in the future.

The EMVCo Payment Tokenisation Specification defines that a token may be requested from a TSP by an entity referred to as a token requestor. A token requestor is required to register with a TSP and comply with requirements, systems and processes defined by the TSP. Upon successful registration, a token requestor is assigned a token requestor ID. The TSP implements a secure method of interaction with registered token requestors.

A payment token, as defined in the EMVCo Payment Tokenisation Specification, is a surrogate value for a customer's primary account number (PAN) that complies with the same validation requirements as the customer's PAN. That is, a payment token may have the same structure as the PAN to which it corresponds. For example, the payment token may be a numerical value which is 12 to 19 digits in length. Further validation requirements may include the inclusion of the Luhn check digit. As a payment token complies with the same validation requirements as its corresponding PAN, the payment token may be processed in the same way as the PAN by any entities handling the payment token. Consequently, a payment token must not have the same value as a PAN or conflict with a PAN. In order to avoid conflicts with customer PANs, the payment tokens are generated within a token issuer identification number (IIN) range. The IIN of a customer's PAN may be the leading 6 digits of the PAN. Therefore, the token IIN range is designated so as not to conflict with a IIN range of a customer's PAN. The last four digits of a payment token may be the same as the last four digits of the customer PAN to which it corresponds, for the purpose of issuing a receipt to the customer, by which the customer can verify that their sensitive information was used in the transaction.

A payment token issued by the TSP may be specified for use in a particular domain. For example, the payment token may be restricted to a particular type of transaction, such as online transactions, transactions initiated by a particular application running on a mobile device, or phone-based transactions. The payment token may also be restricted for use in specific retail sectors, to prevent wider misuse of the customer's details. Further, the payment token may be subject to a geographical restriction, such as use within the United Kingdom.

The EMVCo Payment Tokenisation Specification is applicable to both 'cardholder-present' and 'cardholder-not-present' (CNP) transactions. A CNP transaction is one in which a transaction is completed, for example, by phone or over the Internet. Since CNP transactions cannot use the physical security devices built into a card, exposure to fraud is higher in CNP transactions.

### Telephone-based transactions

As noted above, exposure to fraud is higher in CNP transactions than in 'cardholder-present' transactions. Further, current solutions to ensure compliance with PCI DSS requirements may not be practical for implementation in outsourcing environments. Consequently, there exists a need for a solution to ensure compliance with PCI DSS requirements and reduce exposure to fraud in CNP transactions. Any such solution should also be compatible with merchant centres in outsourcing environments.

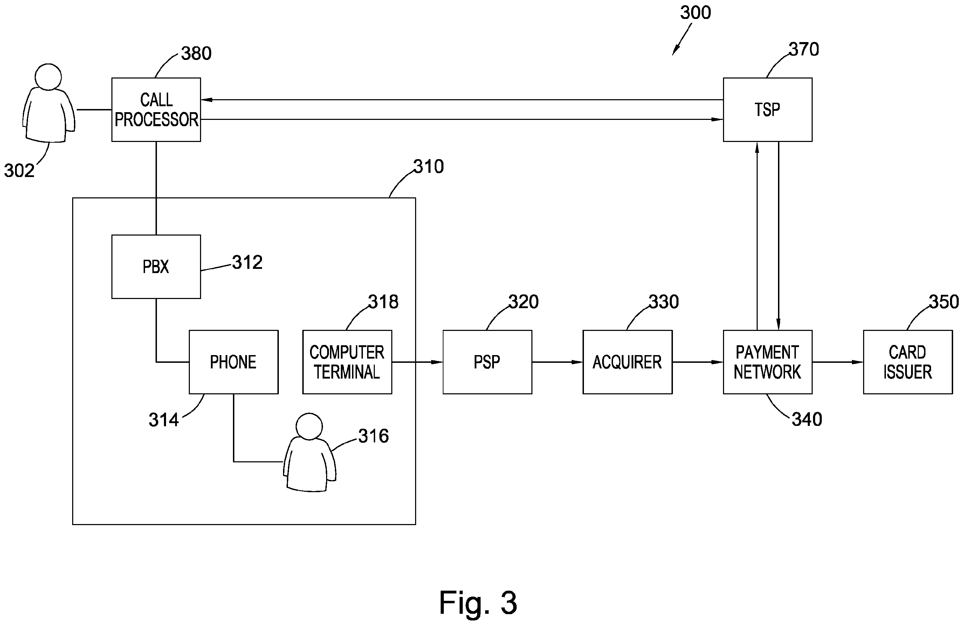

Figure 3 shows a first embodiment of a contact centre environment 300. The contact centre environment 300 is similar to the contact centre environment illustrated in Figure 1. That is, the contact centre environment 300 comprises a contact centre 310 to which a call from a customer 302 is routed and switched by PBX 312 to a phone 314 of a contact centre agent 316 operating a computer terminal 318, whereby sensitive information input at the computer terminal 318 is relayed, using a PSP 320, to an acquirer 330, and passed to a card issuer 350 via a payment network 340. However, the contact centre environment 300 also includes a call processor 380 in communication with a TSP 370.

A call is initiated by the customer 302. As a result of a prior arrangement between the contact centre 310 and the proprietor of the call processor 380, customer calls intended for receipt at the contact centre 310 are redirected via the call processor 380. This may be achieved by the contact centre 310 having updated their telephony supplier to redirect customer calls to the call processor 380, which may make an additional call to the contact centre 310.

Following initiation of a customer call, the contact centre agent 316 or IVR system (not shown) requests sensitive information from the customer 302. The call processor 380 receives signals from the customer 302, intended for receipt at the contact centre 310, and monitors the received signals for sensitive data. The sensitive data may be input by the customer 302 using a telephone keypad, in which case the call processor 380 may intercept the sensitive data by monitoring the received signals for predetermined patterns of DTMF tones. Alternatively, the call processor 380 may include speech recognition software, in which case the call processor 380 may monitor the received signals for sensitive data spoken by the customer 302. As a further alternative, the sensitive data may be provided by an application running on a mobile phone, or by any other third party application authorised by the customer 302 to provide sensitive information to the contact centre agent 316 or IVR system. Sensitive data provided by a mobile application or other third party application may be conveyed in response to a command or prompt issued by the contact centre agent 316 or computer terminal 318 or IVR system. The call processor 380 prevents the sensitive information from being received at the contact centre 310.

Upon detection of the PAN and card expiry date provided by the customer 302, the call processor 380 requests a payment token from the TSP 370. The call processor 380 may be required to provide certain minimum requirements in order to receive a payment token corresponding to a customer's PAN. The minimum requirements may, for example, include the token requestor ID, the PAN, and the card expiry date.

Upon receipt of the token requestor ID, the PAN, and the card expiry date, the TSP 370 generates a payment token and a payment token expiry date. The TSP 370 may also generate a token assurance level, which is initially assigned a value of 00. The token assurance level is used in the identification and verification (ID&V) method as defined in the EMVCo Payment Tokenisation Specification, and enables validation of the cardholder and their account in order to establish a confidence level for authentication of the cardholder. The value of the token assurance level is initially set to 00 as no ID&V process is carried out at this stage. The generated payment token, payment token expiry date and token assurance level are stored at the TSP 370 and passed to the call processor 380. In addition, the TSP 370 stores the PAN, token requestor ID and card expiry date. The call processor 380 may also store the received data for later use.

The call processor 380 sends the payment token to the phone 314 and/or computer terminal 318 of the contact centre agent 316, or to the IVR system. The call processor 380 may output the payment token to the phone 314 and/or computer terminal 318 of the contact centre agent 316, or to the IVR system, in a number of different formats. For example, the call processor 380 may convert the payment token to DTMF tones, which are then output to the phone 314 of the contact centre agent 316. The call processor 380 may further be operable to output the payment token directly to the computer terminal 318 of the contact centre agent 316. The payment token may be output by the call processor 380 in numerical format, or masked by the call processor 380 to prevent the payment token being visible to the contact centre agent 316. Alternatively, a converter may be used to convert the DTMF tones received to numerical format and input the numerical data at the computer terminal 318.

Alternatively, in a contact centre 310 using IVR systems, the IVR system may be able to convert the DTMF tones output by the call processor 380 to numerical data which is entered into a computer (not shown).

Alternatively, the call processor 380 may convert the payment token to spoken text, which is then relayed to the phone 314 of the contact centre agent 316. The contact centre agent 316 may then enter the spoken text output by the call processor 380 at the computer terminal 318. As above, the spoken text received from the call processor 380 may be processed by an IVR system for the purpose of data entry.

As a further alternative, the call processor 380 may output the payment token directly to the computer terminal 318 of the contact centre agent 316 or IVR system, without outputting the payment token in an audible format.

As stated above, the call processor 380 may also output the card expiry date. This may be output to the phone 314 and/or computer terminal 318 of the contact centre agent 316, or to the IVR system, using the same mechanisms as described above. Once the payment token and card expiry date have been input to the computer terminal 318, the contact centre agent 316 or IVR system asks the customer 302 to provide their CV2 data. Again, the call processor 380 receives signals from the customer 302 and monitors the received signals for sensitive data, which may be input by the customer 302 using any of the methods described above for providing their PAN.

Upon detection of the customer's CV2 data, the call processor 380 sends a request to the TSP 370 for an updated token assurance level to be assigned to the payment token. The call processor 380 sends the payment token, token requestor ID and CV2 data to the TSP 370. The CV2 data is classified under the EMVCo token specification as an 'optional cardholder data element'. Optional cardholder data elements may, for example, also include the customer's billing address and post code. Persons skilled in the art will appreciate that any of the foregoing information may be used to provide additional validation of the cardholder. However, as contact centres are specifically prohibited from storing the CV2, the following paragraphs will make particular reference to validation information in the form of CV2 data.

In adherence to the EMVCo Payment Tokenisation Specification, the TSP 370 forwards the received payment token, token requestor ID and CV2 data to the card issuer 350 and requests identification and verification (ID&V) of the cardholder data. The ID&V method is performed by the card issuer 350 on the basis of the received information, and an updated token assurance level is generated and sent to the TSP 370. The TSP 370 then stores the updated token assurance level and sends the updated token assurance level to the call processor 380.

The call processor 380 may optionally perform a determination upon receipt of the updated token assurance level. The call processor 380 may check whether the updated token assurance level is greater than a predetermined threshold and may proceed with the transaction if this threshold is exceeded. If the updated token assurance level fails to meet the predetermined threshold, the transaction may be terminated, and the call processor 380 may notify the contact centre agent 316 or IVR system so that the customer 302 can be informed that the transaction has not been successful.

The call processor 380 optionally generates a "random" three- or four-digit number which will be referred to as dummy CV2 data. The optional dummy CV2 data may be required to comply with certain requirements. One such requirement may be that each digit in a particular position in the string of digits comprising the dummy CV2 data must have a different numerical value to the digit in the corresponding position in the customer's CV2 data. For example, the second digit of the dummy CV2 data may be required to have a different value to the second digit of the CV2 data. The call processor 380 may output the dummy CV2 data to the phone 314 and/or computer terminal 318 of the contact centre agent 316 or to the IVR system using the same mechanisms as for output of the payment token.

Following input of the payment token, card expiry date and, optionally, dummy CV2 data at the computer terminal 318, the transaction may proceed. The payment token, dummy CV2 data and card expiry date are passed, using the PSP 320, to the acquirer 330. This information is then transferred by the acquirer 330 over the payment network 340. As the payment token complies with the same formatting and validation rules as the customer's PAN, the transaction proceeds as if the customer's PAN, card expiry date and CV2 data had been input at the computer terminal 318.

The payment network 340 recognises that the customer information, received from the contact centre 310 via the PSP 320 and acquirer 330, is tokenised, and therefore interfaces with the TSP 370 to detokenize the payment token. The payment network 340 sends the payment token to the TSP 370 along with any other data required by the TSP 370 to ensure that the request for detokenization is from a trusted source and to enable the TSP 370 to retrieve the customer's PAN. Upon receipt of the payment token and other information, the TSP 370 retrieves the customer PAN and updated token assurance level associated with the payment token and passes this information to the payment network 340.

The TSP 370 may additionally retrieve the token requestor ID and pass this information to the payment network 340. Upon receipt of the token requestor ID, the payment network 340 may perform a domain restriction check.

Upon inspection of the updated token assurance level, the payment network 340 determines that the token assurance level has been updated following a request for ID&V from the TSP 370. The payment network 340 therefore discards any dummy CV2 data. The payment network 340 then sends the customer's PAN and card expiry date to the card issuer 350, along with the updated token assurance level, and adds an indicator conveying to the card issuer 350 that an 'on-behalf-of' validation has already been performed upon request from the TSP 370.

Upon receipt of the customer's PAN and card expiry date, the updated token assurance level and the 'on-behalf-of' validation indicator, the card issuer 350 issues an authorisation response indicating whether the transaction is accepted or declined. The card issuer 350 may determine whether to accept or decline the transaction on the basis of the updated token assurance level. The card issuer 350 includes the customer's PAN in the authorisation response and sends the authorisation response to the payment network 340. Upon receipt of the authorisation response, the payment network 340 sends the PAN to the TSP 370 to be re-exchanged with its associated payment token. The TSP 370 then sends the payment token to the payment network 340. The payment network 340 sends the payment token to the acquirer 330 for onward sending to the PSP 320 and contact centre 310.

Upon receipt of the payment token and authorisation response at the contact centre 310, the contact centre agent 316 or IVR system advises the customer 302 of whether the transaction has been accepted or declined by the card issuer 350.

Therefore, the call processor 380 shown in Figure 3, in communication with the TSP 370, prevents the customer's sensitive information from being stored within or transmitted through the contact centre 310.

After the authorisation response has been received at the contact centre 310 and the customer 302 has been informed of the success or failure of the transaction, the call processor 380 may request deletion of the payment token and associated customer information. The request for deletion may be triggered by a notification from the contact centre 310 that payment has been either authorised or declined. The call processor 380 may be operable to detect whether the customer 302 has been informed of the success or failure of payment, and request deletion thereafter. Alternatively, or in addition, the call processor 380 may wait until a predefined period of time has passed before requesting deletion of the payment token and associated customer information.

In order to request deletion of the payment token, the call processor 380 may send a request to the TSP 370 for the payment token, customer PAN and any other information stored at the TSP 370 in relation to the customer PAN to payment token mapping to be deleted. The TSP 370 may then delete the customer information associated with the payment token and confirm deletion to the call processor 380.

### Telephone-based transactions involving TSPs with CV2 storage capability

The first aspect of the first embodiment, as described above, includes the step of ID&V being carried out on request from the TSP 370. ID&V is carried out because the TSP 370 is not capable of storing CV2 data associated with a particular payment token or generating and storing a 'CV2 token' or other surrogate value corresponding to the CV2 data. Therefore, the TSP 370 receives CV2 data and requests an update of the token assurance level, which is presented to the card issuer 350 with the detokenized customer PAN for authorisation. This ensures that the CV2 data need not be presented to the card issuer 350 in order for the transaction to be authorised or declined.

Alternatively, in a second aspect of the first embodiment, the TSP 370 may be capable of storing CV2 data associated with a particular payment token or token requestor ID. The TSP 370 may further be operable to generate a CV2 validator, which may be used in the payment transaction in place of the customer's CV2 data. The CV2 validator may use the same formatting as the CV2 data (that is, the CV2 validator may be a three- or four-digit number). In addition, the CV2 validator may be required to comply with additional requirements, such as those described above with respect to the dummy CV2 data.

In an environment in which the TSP 370 is capable of storing a customer's CV2 data and associated CV2 validator for the duration of the payment transaction, it may not be necessary for the ID&V process to be requested by the TSP 370 upon receipt of the customer's CV2 data. Accordingly, the token assurance level may not be updated.

In the second aspect of the first embodiment, the call processor 380 receives signals from the customer 302 and monitors these signals as in the first aspect. The call processor 380 monitors the received signals for the customer PAN and requests, receives and outputs a payment token as described above. Upon detection of the customer's CV2 data, the call processor 380 sends a request to the TSP 370 for a CV2 validator to be returned in place of the customer's CV2 data. Upon receipt of the request, the TSP 370 generates a CV2 validator and verifies that the generated CV2 validator is compliant with the formatting requirements noted above.

It will be appreciated that the request for a CV2 validator may be comprised within the request for a payment token to be returned in place of the customer's PAN, and thus the CV2 validator and payment token may be returned to the call processor 380 at the same time. Alternatively, if the request for a CV2 validator is separate to the request for a payment token, the call processor 380 may be required to provide additional information to the TSP 370, in the same way as for requesting the payment token. The additional information may, for example, comprise the token requestor ID and the payment token.

The call processor 380 may output the CV2 validator to the phone 314 and/or computer terminal 318 of the contact centre agent 316 or IVR system using the same mechanisms as for output of the payment token.

Following input of the payment token, card expiry date and CV2 validator, at the computer terminal 318, the transaction may proceed. The payment token, CV2 validator and card expiry date are passed, using the PSP 320, to the acquirer 330. The acquirer 330 transfers this information over the payment network 340. As both the payment token and the CV2 validator comply with the same validation and formatting rules as the customer's PAN and CV2 data, respectively, the transaction proceeds as if the customer's PAN, card expiry date and CV2 data had been input at the computer terminal 318.

The payment network 340 interfaces with the TSP 370 to detokenize the payment token, as described above. In addition, the payment network 340 sends the CV2 validator to the TSP 370. Upon receipt of the CV2 validator, the TSP 370 retrieves the customer's CV2 data and passes this information to the payment network 340. The TSP 370 may also validate that the CV2 validator received from the payment network 340 corresponds to the CV2 data stored at the TSP 370.

The TSP 370 may additionally retrieve the token requestor ID and pass this information to the payment network 340. Upon receipt of the token requestor ID, the payment network 340 may perform a domain restriction check.

The payment network 340 then sends the customer PAN, card expiry date and CV2 data to the card issuer 350. Upon receipt, the card issuer 350 issues an authorisation response indicating whether the transaction is accepted or declined. The payment network re-tokenises the customer's PAN included in the authorisation response as described above. The CV2 data is not included in the authorisation response and therefore no subsequent re-tokenisation of the CV2 data is necessary. Upon receipt of the payment token and authorisation response at the contact centre 310, the contact centre agent 316 or IVR system advises the customer 302 whether the transaction has been accepted or declined by the card issuer 350.

Immediately after the payment network 340 has received the authorisation response from the card issuer 350, the payment network 340 may instruct the TSP 370 to delete the CV2 data and CV2 validator stored at the TSP 370. Alternatively, or in addition, the payment network 340 may instruct the TSP 370 to delete the CV2 data and CV2 validator stored at the TSP 370 upon expiry of a predetermined period of time. Alternatively, or in addition, the deletion of the CV2 data and CV2 validator may be instigated by the TSP 370, following the process of retrieving the CV2 validator. As explained above, deletion of the CV2 data is necessary as it is classified as sensitive authentication data (SAD), which must not be stored after authorisation of the payment transaction, in accordance with PCI DSS requirements.

After the customer 302 has been informed of the success or failure of the transaction, the call processor 380 may request deletion of the payment token and associated customer information as described in the first aspect of the first embodiment.

### Subsequent telephone-based transactions by the same customer

Some contact centres may store a payment token associated with a particular transaction, so that a customer can initiate subsequent transactions without providing their PAN and card expiry date. For ease of reference, these will be referred to as 'repeat' transactions. While any subsequent transaction must necessarily be initiated by the same customer, there is no requirement for the subsequent transaction to be identical to any preceding transactions.

In a third aspect of the first embodiment, a repeat transaction may be initiated if the TSP 370 is capable of storing CV2 data and generating a CV2 validator. Upon initiation of a repeat transaction, the contact centre agent 316 asks the customer 302 to provide their CV2 data. The call processor 380 monitors signals received from the customer 302 in order to detect CV2 data, as described above. Upon detection of the customer's CV2 data, the call processor 380 sends a request for a CV2 validator, comprising the token requestor ID and the CV2 data, to the TSP 370.

The TSP 370 generates a CV2 validator and stores the CV2 validator, along with the CV2 data and the token requestor ID, in a table which is separate from the table containing the payment token and customer PAN. Storage in a separate table is necessary as the call processor 380 does not have access to the payment token. Therefore, the call processor 380 is not capable of establishing a direct relational link between the customer's PAN and CV2 data. Instead, the customer's CV2 data and the CV2 validator are mapped to the token requestor ID.

The call processor 380 may output the CV2 validator to the contact centre 310 as described in the second aspect of the first embodiment.

Following input of the CV2 validator, the payment token is retrieved from storage within the contact centre 310. The card expiry date may also have been stored within the contact centre 310, and may be retrieved if necessary. Following retrieval of the relevant information, the transaction proceeds as described in the second aspect of the first embodiment. Again, the payment network 340 interfaces with the TSP 370 to detokenize the payment token.

The TSP 370 returns the customer PAN, along with the token requestor ID, which is stored in the table mapping the payment token to the customer's PAN. The payment network 340 then sends a request, comprising the CV2 validator and token requestor ID, to the TSP 370 for return of the customer's CV2 data. As described above, the token requestor ID is stored in the table mapping the CV2 data to the CV2 validator and thus the TSP 370 is able to authenticate the request and return the customer's CV2 data.

As described above, the payment network 340 may also perform a domain restriction check.

Authorisation by the card issuer 350, issuance of an authentication response, tokenisation of any sensitive information comprised within the authentication response, and deletion of the CV2 data and CV2 validator are carried out by the relevant entities as described in the second aspect of the first embodiment.

In addition, the call processor 380 may request deletion of the payment token stored at the TSP 370, as described above. Alternatively, the payment token may be stored within the contact centre 310 for future transactions, if necessary.

### Alternative telephone-based transaction environments

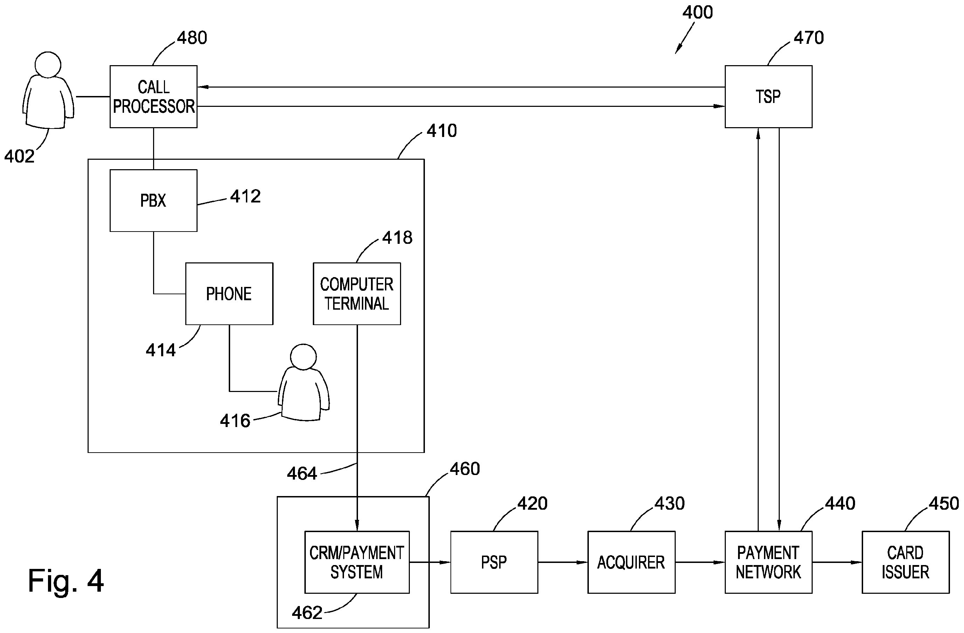

As noted above with reference to Figure 2, contact centre outsourcing environments may be used by certain merchants. In such environments, information input at an agent's computer terminal may be passed to a merchant system using a proprietary secure data link. As noted above, this results in difficulties in removing sensitive data from the environment. Figure 4 shows such an environment in a second embodiment of a contact centre environment 400. The contact centre environment 400 includes a link 464 from a contact centre 410 to a separate merchant centre 460 hosting a separate merchant system 462.

In the contact centre environment 400, the customer's sensitive data is tokenised using the methods as described above with respect to the first embodiment illustrated in Figure 3. The data input to the computer terminal 418 of the contact centre agent 416 consists of the payment token and dummy CV2 data or CV2 validator (as appropriate). For ease of reference, the dummy CV2 data or CV2 validator will be referred to herein as surrogate validation information to cover the different aspects of the embodiments. The payment token and surrogate validation information is sent via the proprietary secure data link 464 to the merchant centre 460 for onward sending using the PSP 420. The authorisation message received at the merchant centre 460 comprises the payment token associated with a customer's PAN. Therefore, the call processor 480 shown in Figure 4 prevents the customer's sensitive information from being stored within or transmitted through the merchant centre 460 as well as the contact centre 410. The repeat transaction described above is also applicable to contact centre outsourcing environments in which a payment token may be stored at the merchant centre 460.

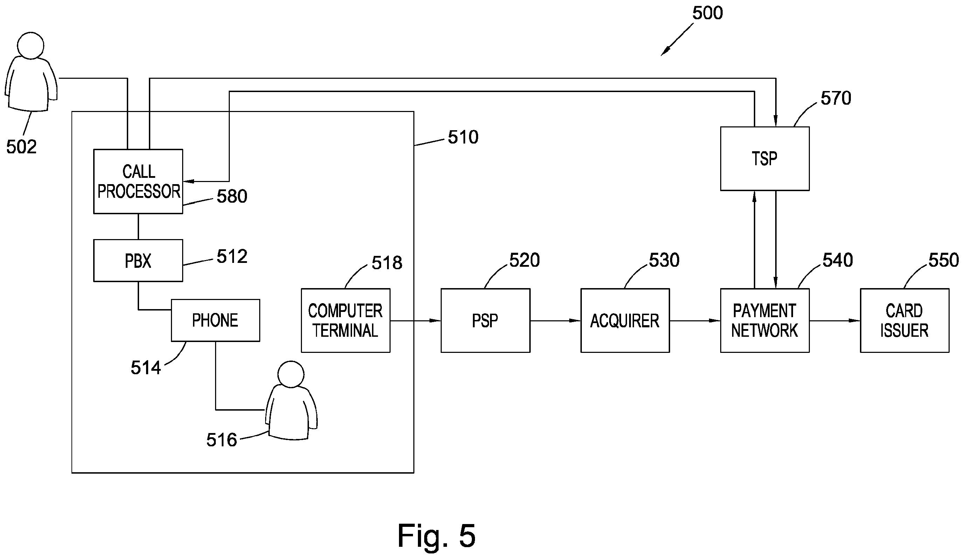

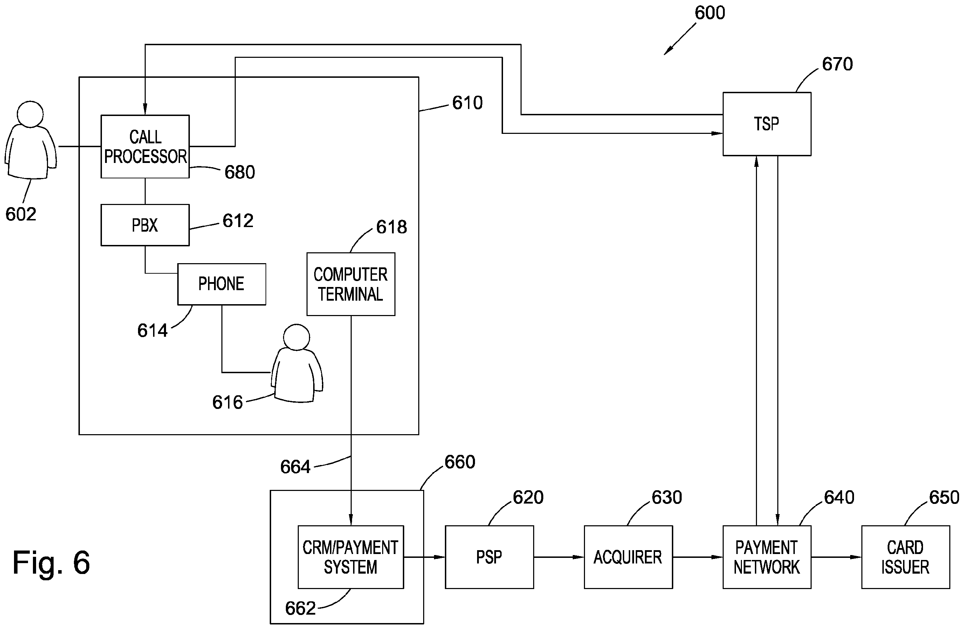

The call processor shown in Figure 3 or Figure 4 may be located at any point between the customer's phone and the contact centre. Alternative environments are shown in Figure 5 and Figure 6.

Figure 5 shows a third embodiment of a contact centre environment 500. The contact centre environment 500 is similar to the first embodiment illustrated in Figure 3, but with the call processor 580 located within the contact centre 510 itself. The call processor 580 intercepts the customer's sensitive information before the received signals pass through the PBX 512. Although the customer's sensitive information is physically received within the contact centre 510, the use of the call processor 580 in Figure 5 ensures that the remainder of the contact centre 510 does not store or transmit cardholder data. That is, no cardholder data is transmitted or stored within the contact centre 510, with the exception of the functions carried out by the call processor 580.

Figure 6 shows a fourth embodiment of a contact centre environment 600. The contact centre environment 600 is similar to the second embodiment illustrated in Figure 4, but with the call processor 680 located within the contact centre 610 itself. Again, the call processor 680 intercepts the customer's sensitive information before the received signals pass through the PBX 612, thus ensuring that the remainder of the contact centre 610 does not store or transmit cardholder data. That is, no cardholder data is transmitted or stored within the contact centre 610, with the exception of the functions carried out by the call processor 680.

### Call processor for use in telephone-based transactions

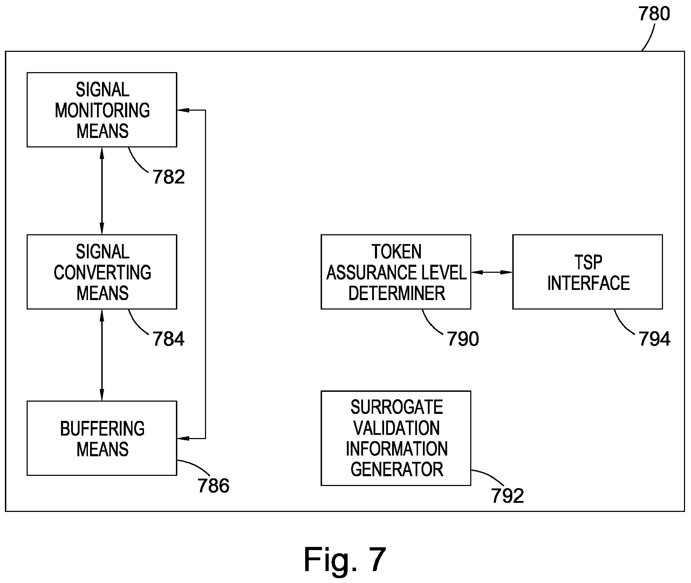

Figure 7 shows a schematic diagram of a call processor 780 for use in the first to fourth embodiments of contact centre environments, illustrated in Figures 3 to 6, respectively. As shown in Figure 7, the call processor 780 may comprise a signal monitoring means 782, operable to receive signals originating from the customer, and monitor these signals for sensitive information. The signal monitoring means 782 may, for example, be operable to detect a predetermined pattern of DTMF tones comprised within the received signals or spoken text comprising numerical information, or to detect sensitive information from any other third party application authorised by the customer 702.

The call processor 780 may further comprise a TSP interface 794, operable to request a payment token from a TSP and receive tokenised information. The TSP interface 794 may further be operable to send CV2 data to the TSP and request updating of a token assurance level associated with the payment token. The call processor 780 may further comprise a surrogate validation information generator 792, operable to generate a three- or four-digit random number for use as dummy CV2 data.

Additionally, the TSP interface 794 may further be operable to request deletion of the payment token stored at the TSP. The TSP interface 794 may send such a request upon receipt of a notification from the contact centre that payment has either been authorised or declined. Therefore, the signal monitoring means 782 may further be operable to monitor signals received from the contact centre for indications conveying the success or failure of the transaction. Alternatively, or in addition, the TSP interface 794 may send the request for deletion of the payment token upon expiry of a predetermined time period.

As noted above, the call processor 780 may interface with a TSP which is capable of generating a CV2 validator in response to receiving CV2 data, and storing the CV2 validator and associated CV2 data. In this case, the TSP interface 794 may be operable to send a request for a CV2 validator to the TSP along with a customer's CV2 data, and receive a CV2 validator in return.

In addition, the call processor 780 may comprise signal converting means 784. The signal converting means 784 may be operable to convert any payment tokens and CV2 validators received from the TSP or dummy CV2 data generated by the surrogate validation information generator 792 to a format suitable for output to the contact centre. As described above, this information may be output as DTMF tones or spoken text, and/or may be output directly to the computer terminal of the contact centre agent. Therefore, the signal converting means 784 may be operable to convert the tokenised, validator, or dummy information to DTMF tones or spoken text and to output this information in an audible format to the phone of the contact centre agent. Additionally, the signal converting means 784 may be operable to output the data directly to the computer terminal of the contact centre agent.

In order to facilitate the monitoring of signals, request for tokenised information, and subsequent conversion for output in a suitable format, the call processor 780 may comprise buffering means 786, operable to store a portion of the signals so that the monitoring, requesting and converting do not need to be carried out instantaneously.

The call processor 780 may optionally comprise a token assurance level determiner 790, operable to compare a received updated token assurance level against a predetermined threshold and determine whether a transaction may proceed.

### Web-based transactions

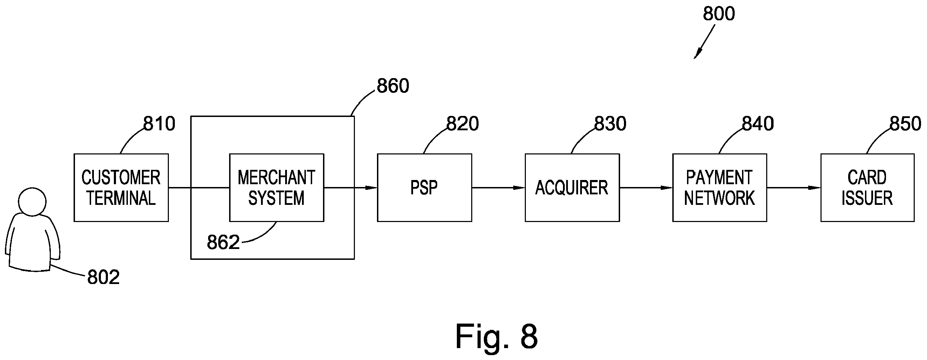

Sensitive information may alternatively be provided by a customer in a web-based transaction. As stated above, web-based transactions are also classed as CNP transactions. A schematic diagram of the entities involved in such a known transaction 800 is shown in Figure 8. A customer 802 may input sensitive information including their PAN and CV2 data at a customer terminal 810 hosting a merchant's web page. The sensitive information input at the customer terminal 810 is then sent to the merchant system 862, located within a merchant centre 860. The sensitive information is relayed, using the PSP 820, to the acquirer 830, and passed to the card issuer 850 via the payment network 840. The card issuer 850 then returns an authorisation response via the payment network 840, and the response is passed back, in turn, to the acquirer 830, the PSP 820 and the merchant system 862. The merchant system 862 then sends a message to the customer terminal 810 advising the customer 802 whether the transaction has been accepted or declined.

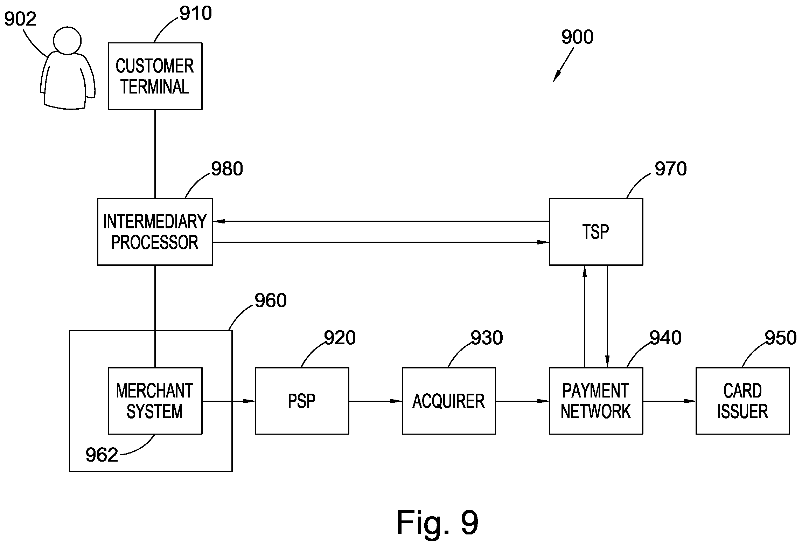

Figure 9 shows a fifth embodiment of a transaction environment 900. The transaction environment 900 is similar to the web-based environment illustrated in Figure 8, but additionally incorporates an intermediary processor 980 in communication with a TSP 970. In a similar environment to the first embodiment described above with reference to Figure 3, the intermediary processor 980 is operable to monitor signals received from the customer terminal 910 in order to detect sensitive information within those signals.

Information input at the customer terminal 910 may be routed to the intermediary processor 980 acting as a proxy. This is achieved as a result of a prior arrangement between the merchant system 962 and the proprietor of the intermediary processor 980. For example, the merchant system 962 with domain name www.merchant.com at IP address 1.2.3.4. may update the DNS lookup to configure communications addressed to www.merchant.com to be routed to the IP address of the intermediary processor 980, for example 5.5.5.5. The intermediary processor 980 at IP address 5.5.5.5. then initiates a connection with the merchant system 962 at IP address 1.2.3.4.

Alternatively, only a sub-domain of the merchant system 962 may be proxied to the intermediary processor 980. For example, if the customer 902 accesses the domain name www.merchant.com and selects products intended for purchase, the customer 902 may be redirected to cart.merchant.com upon initiating a command to proceed to a payment page. The subdomain cart.merchant.com may be located at a different IP address to the merchant system 962 and communications addressed to the subdomain may be routed to the IP address of the intermediary processor 980 as described above. As a further alternative, the URL accessed from the customer terminal 910 may be changed in order to redirect the connection from the customer terminal 910 to the intermediary processor 980. For example, the customer 902 requesting a connection to www.merchant.com may be redirected to a different URL, such as merchant.processor.com.

The sensitive information may be input as numerical data by the customer 902 at the customer terminal 910. Alternatively, the sensitive information may be provided by an application running on a mobile device, or by any other third party application authorised by the customer 902 to provide sensitive information to merchant system 962.

Upon detection of the PAN and card expiry date provided by the customer 902, the intermediary processor 980 requests a payment token from the TSP 970, in a similar way as described above with respect to the first embodiment, illustrated in Figure 3. The intermediary processor 980 then receives the payment token and token assurance level generated at the TSP 970 and stores any of the received information as appropriate.

CV2 data input at the customer terminal 910 may also be detected by the intermediary processor 980. The intermediary processor may generate 'dummy' CV2 data and request an updated token assurance level in the same way as described in the first aspect of the first embodiment.

The intermediary processor 980 may then send the payment token and dummy CV2 data to the merchant system 962. As described above, the protected information can be output using a number of different methods enabling verification of entry of information. However, in a web-based transaction, it may not be necessary to employ IVR systems or contact centre agents. Therefore, the protected information may be output directly to the merchant system 962. The protected information may then be passed to the payment network 940 as described in the first embodiment. As the payment token complies with the same formatting and validation rules as the customer's PAN, the transaction proceeds as if the customer's PAN and card expiry date had been input at the customer terminal 910.

Detokenisation of the protected information, authorisation by the card issuer and subsequent re-tokenisation of the customer PAN are carried out in the same way as described in the first aspect of the first embodiment, illustrated in Figure 3.

Upon receipt of the authorisation message, the merchant system 962 may send a notification to the customer terminal 910 relaying the success or failure of the transaction. The intermediary processor 980 may optionally be operable to send a request to the TSP 970 for deletion of the payment token and associated customer information, on the basis of any message sent from the merchant system 962 to the customer terminal 910, and/or after expiry of a predetermined period of time.

### Web-based transactions involving TSPs with CV2 storage capability

As described in the second aspect of the first embodiment illustrated in Figure 3, the TSP 970 may be capable of storing CV2 data and generating a CV2 validator for use in the payment transaction in place of the customer's CV2 data. Therefore, in a second aspect of the fifth embodiment illustrated in Figure 9, the intermediary processor 980 detects the customer's CV2 data as described in the first aspect of the fifth embodiment, and requests a CV2 validator from the TSP 970 as described in the second aspect of the first embodiment.

The intermediary processor 980 may then send protected information, comprising the payment token and CV2 validator to the merchant system 962. The protected information may then be passed to the payment network 940 as in the second aspect of the first embodiment, illustrated in Figure 3.

Detokenisation of the payment token, retrieval of the CV2 data, authorisation by the card issuer and subsequent re-tokenisation of the customer PAN are carried out in the same way as in the second aspect of the first embodiment, illustrated in Figure 3. The merchant system 962 may then send a notification to the customer terminal 910 relaying the success or failure of the transaction.

As described in the second aspect of the first embodiment, the payment network 940 and/or the TSP 970 may instigate deletion of the CV2 data stored at the TSP 970. In addition, the intermediary processor 980 may request deletion of the payment token and customer PAN stored at the TSP 970.

### Subsequent web-based transactions by the same customer

As noted with respect to the third aspect of the first embodiment, some merchant systems may store a payment token associated with a particular transaction, so that a customer can make 'repeat' transactions without providing their PAN and card expiry date. Therefore, in a third aspect of the fifth embodiment illustrated in Figure 9, a repeat transaction may be initiated by a customer 902 if the TSP 970 is capable of mapping the customer's CV2 data to a CV2 validator. The intermediary processor 980 detects the customer's CV2 data as described in the first aspect of the fifth embodiment and requests a CV2 validator from the TSP 970 as described in the third aspect of the first embodiment.

The CV2 validator is then sent to the merchant system 962, which retrieves the payment token from storage. Following retrieval of the relevant information, the transaction proceeds as described in the third aspect of the first embodiment, illustrated in Figure 3.

### Alternative web-based transaction environments

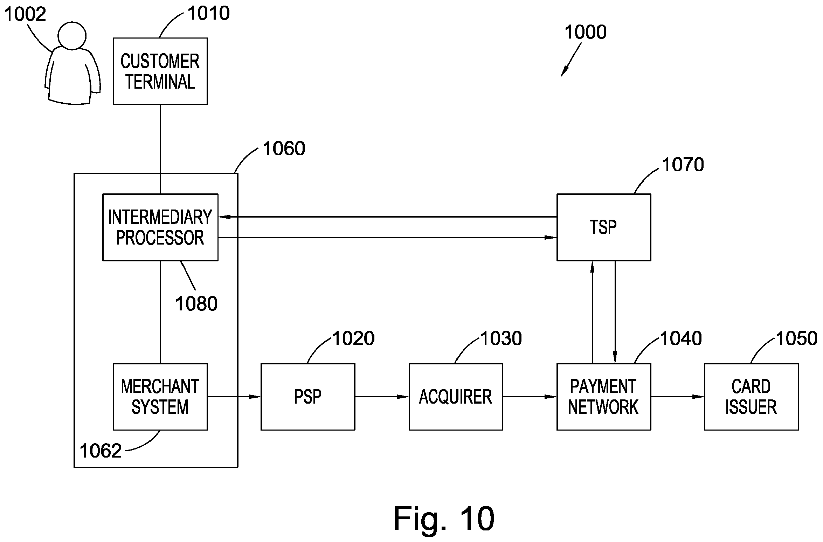

Figure 10 shows a sixth embodiment of a transaction environment 1000. The transaction environment 1000 differs from the fifth embodiment, illustrated in Figure 9, in that the intermediary processor 1080 is located within the merchant centre 1060, in a similar environment to those of the third and fourth embodiments shown, respectively, in Figures 5 and 6. In the transaction environment 1000 shown in Figure 10, the intermediary processor 1080 may monitor all information received at the merchant centre 1060. All web-based transactions may therefore be routed through the intermediary processor 1080 prior to receipt of customer information at the merchant system 1062.

Locating the intermediary processor 1080 within the merchant centre 1060 does not affect the processes described above with reference to the fifth embodiment, illustrated in Figure 9. Therefore, the first, second and third aspects of the fifth embodiment are equally applicable to the sixth embodiment, illustrated in Figure 10.

### Intermediary processor for use in web-based transactions

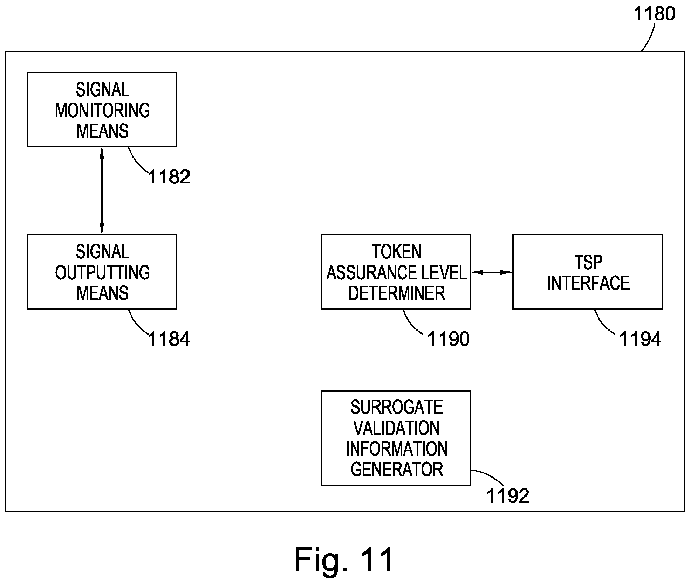

Figure 11 shows a schematic diagram of an intermediary processor 1180 for use in the fifth and sixth embodiments of transaction environments, illustrated in Figures 9 and 10 respectively. The intermediary processor 1180, shown in Figure 11, is similar to the call processor shown in Figure 7. The intermediary processor 1180 may comprise a signal monitoring means 1182, operable to receive signals originating from the customer terminal, and monitor these signals for sensitive information. As noted above, the call processor 1180 may act as a proxy and thus the signal monitoring means 1182 may receive the signals by interception of signals intended for receipt at the merchant system.

The intermediary processor 1180 may comprise a TSP interface 1194, surrogate validation information generator 1192 and token assurance level determiner 1190, each having the same functionality as the equivalent components of the call processor shown in Figure 7. The signal monitoring means 1182 may be operable to monitor signals received from the merchant system for indications conveying the success or failure of the transaction. A signal outputting means 1184 enables the tokenised information and surrogate validation information to be output to the merchant system.

### Exemplary processes

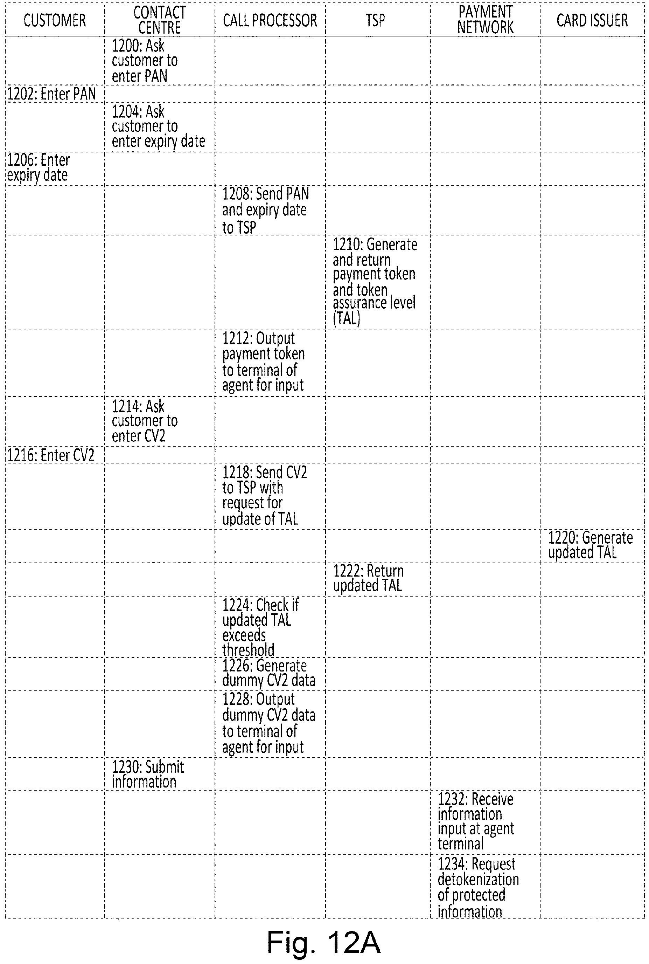

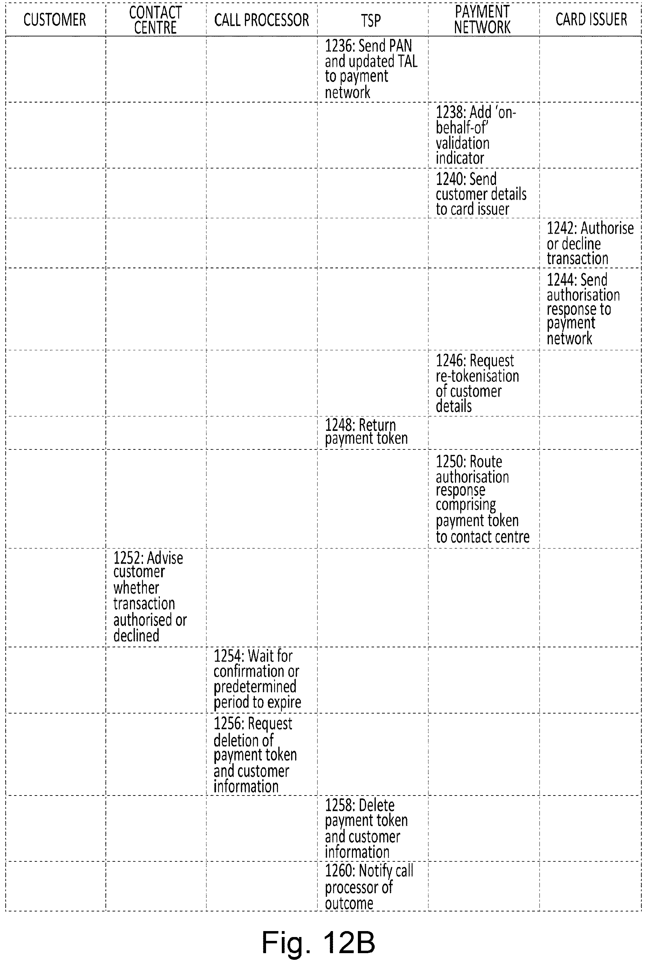

Figures 12A and 12B show an exemplary method of tokenising sensitive information in a transaction in which customer information is provided to a contact centre, which relates to the first aspect of the first embodiment of a contact centre environment, illustrated in Figure 3.

The first part of the method is shown in Figure 12A. In step 1200, a contact centre agent asks for a customer's PAN to be typed in using the customer's telephone keypad. In step 1202, the customer enters this information. In step 1204, the contact centre agent asks for the customer's card expiry date to be entered, which the customer enters in step 1206. In step 1208, a call processor sends the customer's PAN and expiry date to a TSP, which generates and returns a payment token in step 1210, along with an assigned token assurance level. In step 1212, the payment token is output to the contact centre by the call processor and input at the contact centre agent's computer terminal.

In step 1214, the contact centre agent asks the customer to enter their CV2 data, which the customer enters in step 1216. In step 1218, the call processor sends the CV2 data to the TSP with a request for the token assurance level to be updated. After passing the PAN and CV2 to the card issuer, which generates an updated token assurance level in step 1220, the TSP returns an updated token assurance level in step 1222. In step 1224, the call processor may optionally check that the updated token assurance level exceeds a predetermined threshold before permitting the transaction to proceed. In step 1226, the call processor generates random 3-digit 'dummy' CV2 data and, in step 1228, outputs the dummy CV2 data to the contact centre for input at the contact centre agent's computer terminal.

In step 1230, the contact centre agent submits the surrogate information input at the computer terminal, which is then routed to the payment network in step 1232. In step 1234, the payment network recognises that the information routed from the contact centre is tokenised and consequently requests detokenization of the payment token.

The remainder of the method is illustrated in Figure 12B. The TSP receives the request for detokenization of the payment token and sends, in step 1236, the customer's PAN and the updated token assurance level associated with the payment token to the payment network. In step 1238, the payment network recognises that the token assurance level has been updated and adds an indicator conveying to the card issuer that an 'on-behalf-of' validation has been performed by the TSP.

In step 1240, the payment network sends the customer's PAN and other transaction details to the card issuer, along with the 'on-behalf-of' validation indicator. In step 1242, the card issuer either authorises or declines the transaction, and sends an authorisation response back to the payment network in step 1244. In step 1246, the payment network sends a request to the TSP for re-tokenisation of any sensitive information contained within the authorisation response. The TSP returns the payment token in step 1248, which the payment network then includes in the authorisation response in place of the sensitive information. In step 1250, the authorisation response is routed to the contact centre. In step 1252, the contact centre agent advises the customer whether the transaction has been authorised or declined.

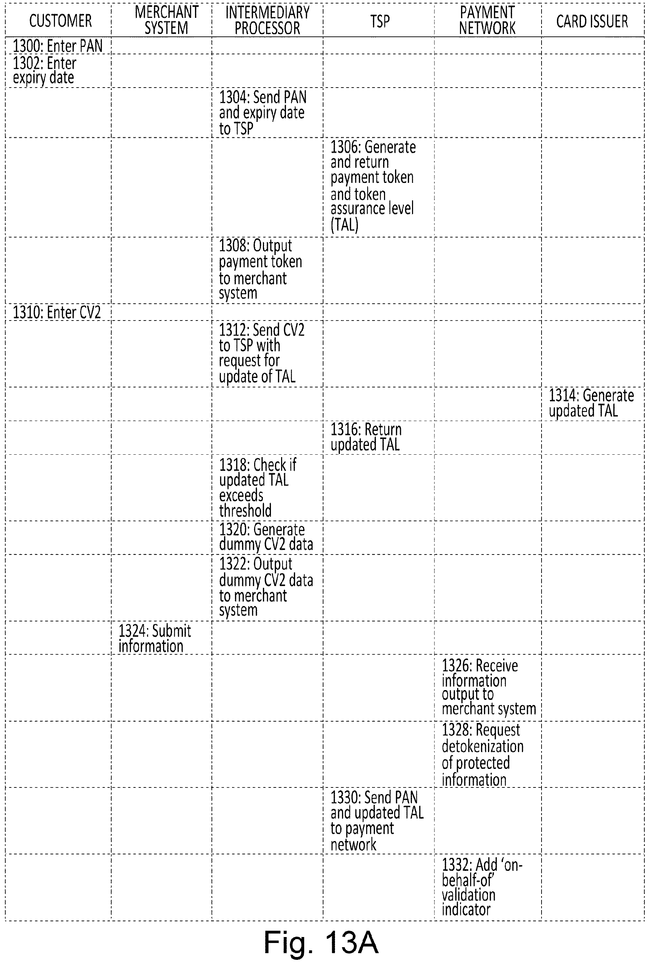

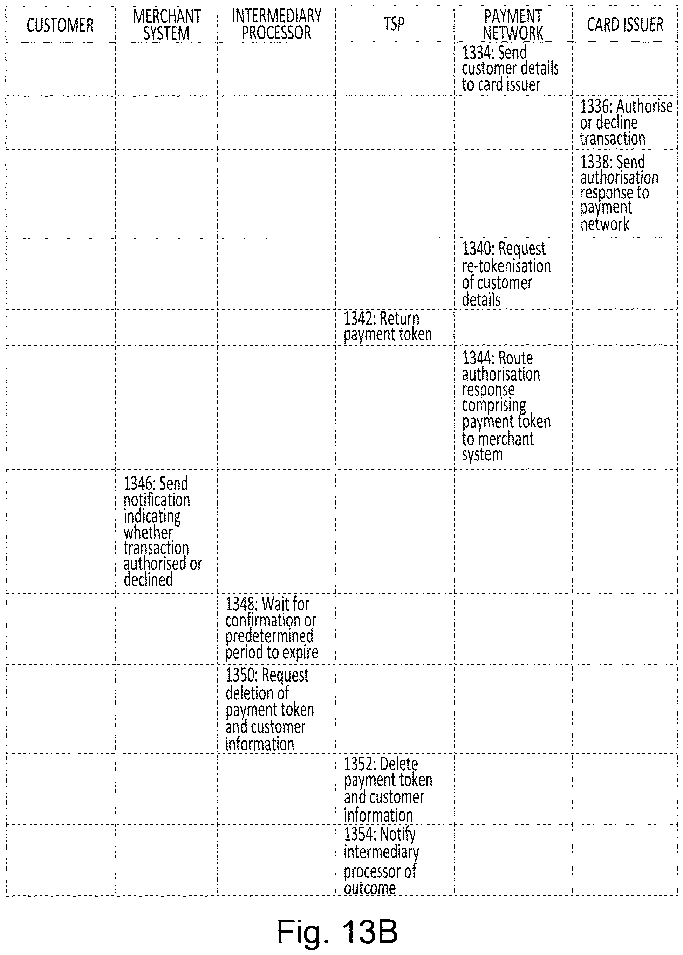

Optionally, in step 1254, the call processor waits for a predetermined time period and/or for confirmation from the contact centre that the transaction has been authorised or declined. Upon expiry of the time period and/or receipt of confirmation, the call processor, in step 1256, sends a request to the TSP for deletion of the payment token and associated sensitive customer information. In step 1258, the TSP deletes this information as instructed and notifies the call processor of the outcome in step 1260. Figures 13A and 13B relate to the first aspect of the fifth embodiment of a transaction environment, illustrated above in Figure 9. That is, Figures 13A and 13B relate to a web-based transaction in which customer information is provided by a customer at a customer terminal.

The first part of the method is shown in Figure 13A. In step 1300, the customer enters their PAN and in step 1302, the customer enters their card expiry date. In steps 1304 and 1306, an intermediary processor requests a payment token in the same way as in steps 1208 and 1210 of Figure 12A. In step 1308, the payment token is output to a merchant system by the intermediary processor.

In step 1310, the customer enters their CV2 data. In steps 1312 to 1322, the intermediary processor requests that the token assurance level be updated and generates 'dummy' CV2 data in the same way as in steps 1218 to 1228 of Figure 12A.

In step 1324, the merchant system submits the protected information. In steps 1326 to 1332 of Figure 13A and steps 1334 to 1344 of Figure 13B, the transaction proceeds as in steps 1232 and 1234 of Figure 12A and steps 1236 to 1250 of Figure 12B. In step 1346, the merchant system sends a notification to the customer indicating whether the transaction has been authorised or declined.

In steps 1348 to 1354, the intermediary processor may optionally request deletion of the payment token and associated customer information as in steps 1254 to 1260 of Figure 12B.

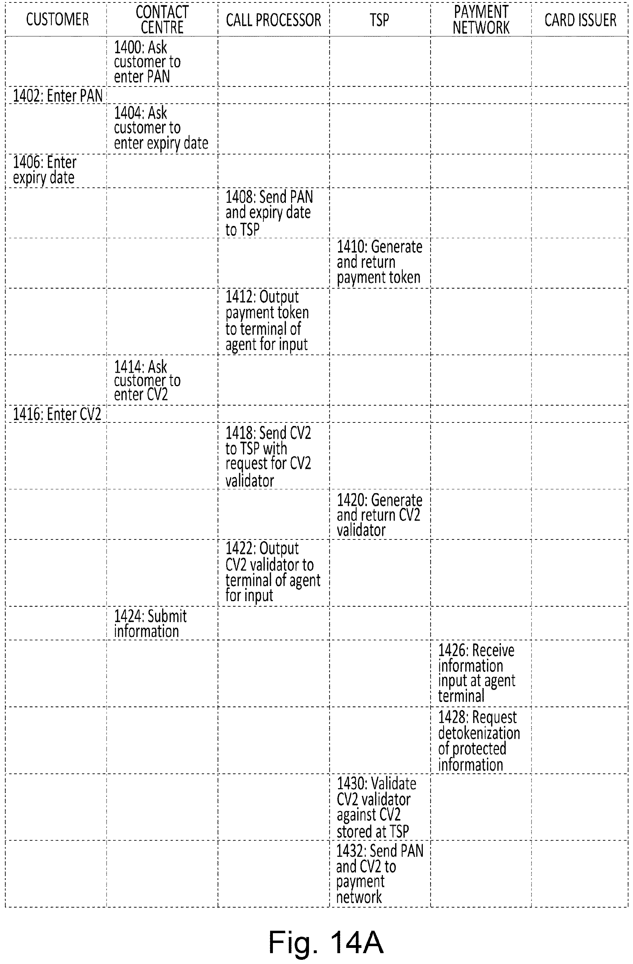

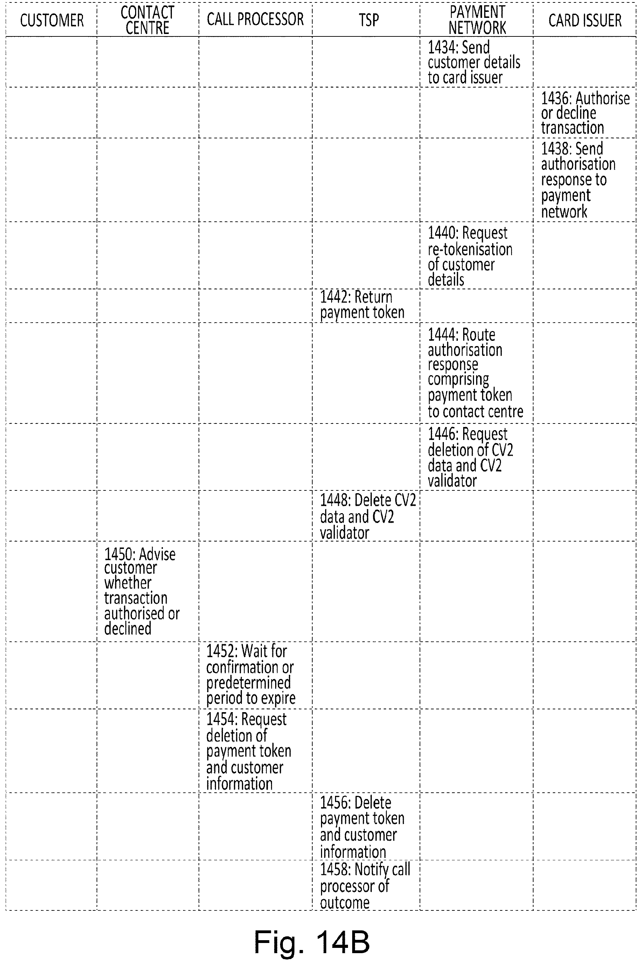

Figures 14A and 14B show a further exemplary method of tokenising sensitive information in a transaction, relating to the second aspect of the first embodiment of a contact centre environment, illustrated in Figure 3. Therefore, the TSP used for tokenisation of a customer's PAN also has the capability of generating a CV2 validator and storing the mapping of the customer's CV2 data to the CV2 validator for the duration of the transaction.

The first part of the method is shown in Figure 14A. In steps 1400 to 1408, the transaction proceeds as in steps 1200 to 1208 of Figure 12A. In step 1410, the TSP returns only a payment token (that is, no token assurance level is returned). In steps 1412 to 1416, the transaction proceeds as in steps 1212 to 1216 of Figure 12A.

In step 1418, the call processor sends the CV2 data to the TSP with a request for a CV2 validator to be returned. The TSP generates a CV2 validator and stores the mapping of the customer's CV2 data to the CV2 validator, in step 1420. The CV2 validator is then returned to the call processor. In step 1422, the call processor outputs the CV2 validator to the contact centre for input at the contact centre agent's computer terminal.

In steps 1424 to 1428, the transaction proceeds as in steps 1230 to 1234 of Figure 12A, with the payment network also requesting return of the customer's CV2 data. In step 1430, the TSP validates that the CV2 validator received from the payment network corresponds to the CV2 data stored at the TSP. In step 1432, the TSP sends the customer's PAN and CV2 data to the payment network.

The remainder of the method is illustrated in Figure 14B. In step 1434, the payment network sends the customer's PAN and CV2 data to the card issuer for authorisation. In steps 1436 to 1444, the transaction proceeds as in steps 1242 to 1250 of Figure 12B.

After the payment network has routed the authorisation response to the contact centre, the payment network sends a request to the TSP for deletion of the CV2 data and CV2 validator stored at the TSP, in step 1446. In step 1448, the TSP deletes the CV2 data and CV2 validator.

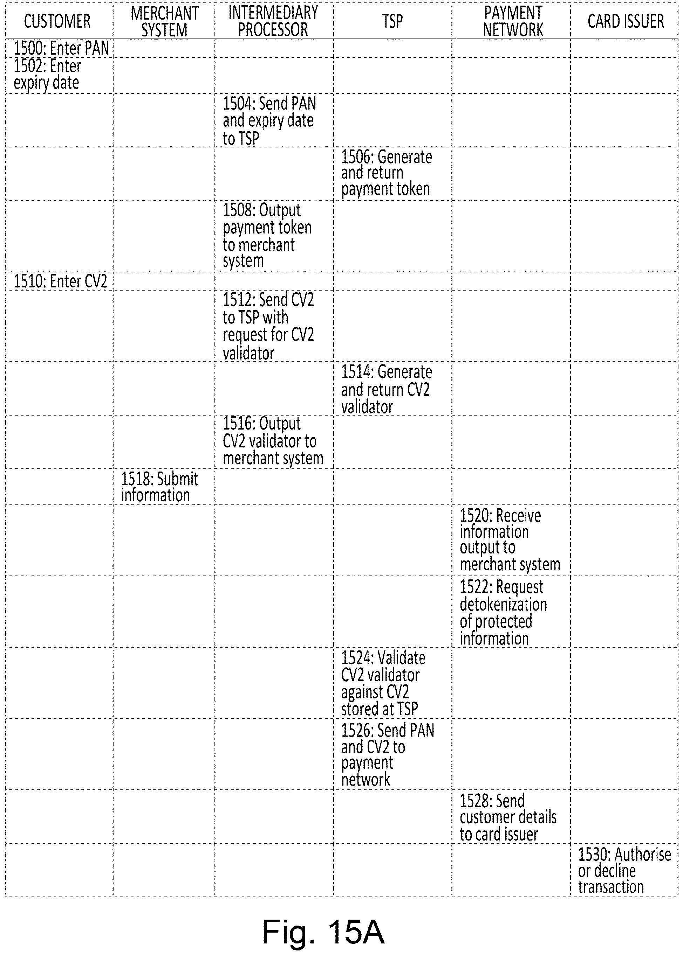

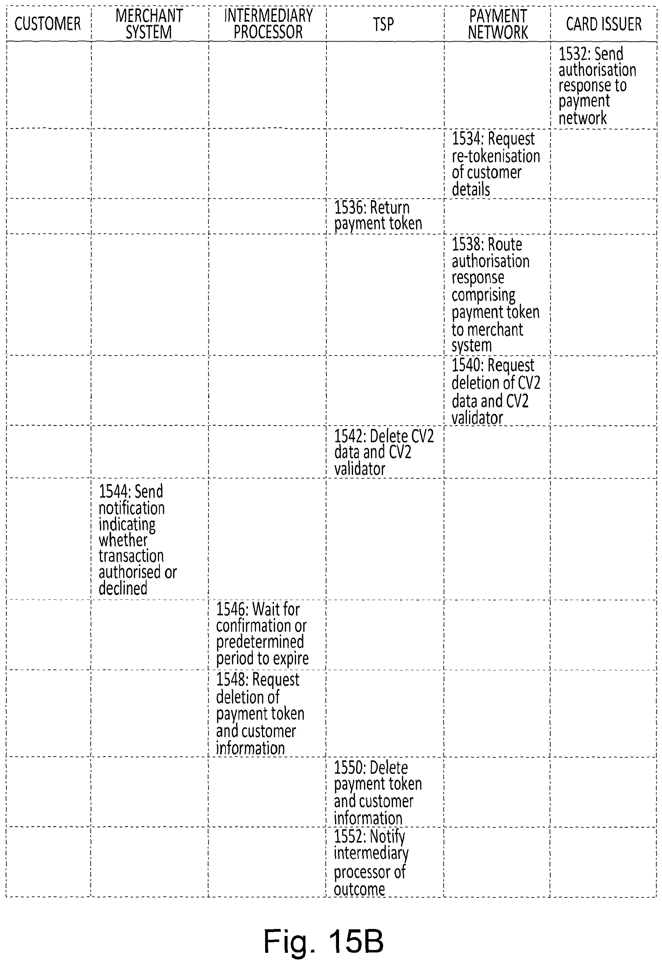

Figures 15A and 15B relate to the second aspect of the fifth embodiment of a transaction environment, illustrated above in Figure 9. As with Figures 14A and 14B, the TSP generates a CV2 validator and stores the mapping of the customer's CV2 data to the CV2 validator for the duration of the transaction.

The first part of the method is shown in Figure 15A. Steps 1500 to 1504 are identical to steps 1300 to 1304 of Figure 13A. As in step 1410 of Figure 14A, the TSP returns only the payment token in step 1506. In step 1508, the payment token is output to a merchant system by the intermediary processor.

In step 1510, the customer enters their CV2 data. In steps 1512 to 1516, the intermediary processor requests, receives and outputs a CV2 validator as in steps 1418 to 1422 of Figure 14A. In steps 1518 to 1530 of Figure 15A and steps 1532 to 1542 of Figure 15B, the transaction proceeds as in steps 1424 to 1432 of Figure 14A and steps 1434 to 1448 of Figure 14B.

In step 1544, the merchant system sends a notification to the customer indicating whether the transaction has been authorised or declined. Steps 1546 to 1552 of Figure 15B are identical to steps 1348 to 1354 of Figure 13B.

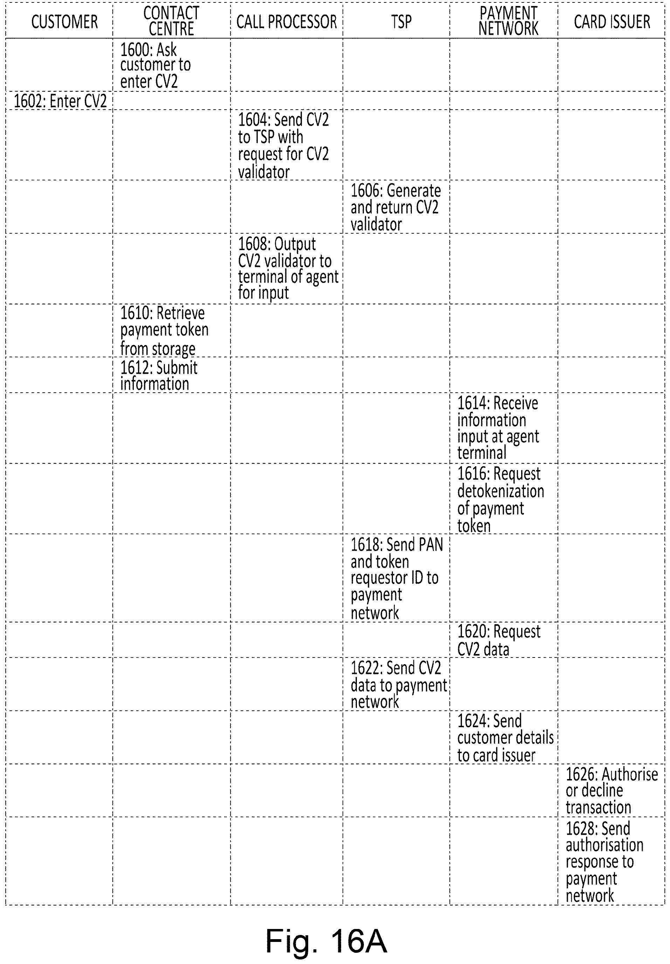

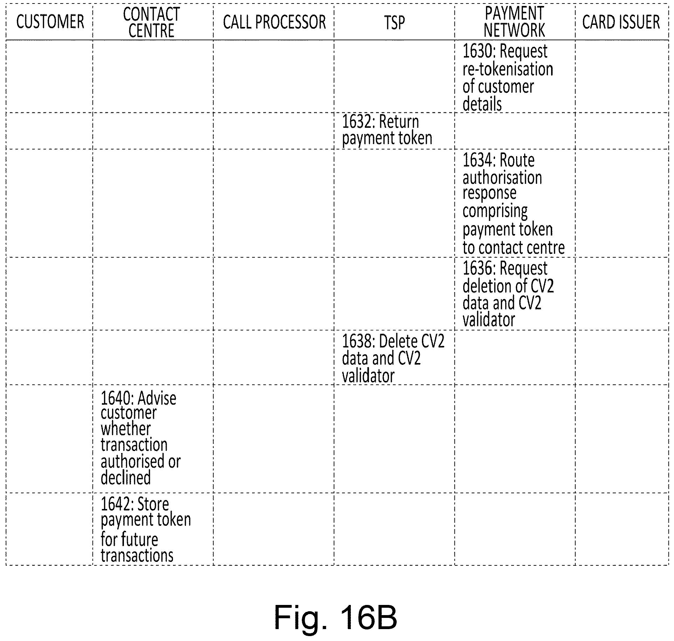

Figures 16A and 16B show an exemplary method of tokenising sensitive information in a 'repeat' transaction relating to the third aspect of the first embodiment of a contact centre environment, illustrated in Figure 3. A payment token associated with the customer's PAN is stored at the contact centre so that the customer can make repeat transactions without providing their PAN and card expiry date. The mapping of the customer's PAN to the payment token is stored at a TSP, which also generates a CV2 validator and stores the mapping of the customer's CV2 data to the CV2 validator for the duration of the transaction.

The first part of the method is shown in Figure 16A. In steps 1600 to 1608, the transaction proceeds as in steps 1414 to 1422 of Figure 14A.

In step 1610, the payment token is retrieved from storage at the contact centre. In step 1612, the contact centre agent submits the retrieved information and CV2 validator input at the computer terminal. In steps 1614 and 1616, the transaction proceeds as in steps 1426 and 1428 of Figure 14A. The TSP sends, in step 1618, the customer's PAN and token requestor ID to the payment network. In step 1620, the payment network sends a request to the TSP for return of the customer's CV2 data. The request comprises the token requestor ID and CV2 validator. In step 1622, the TSP retrieves the customer's CV2 data and sends it to the payment network.

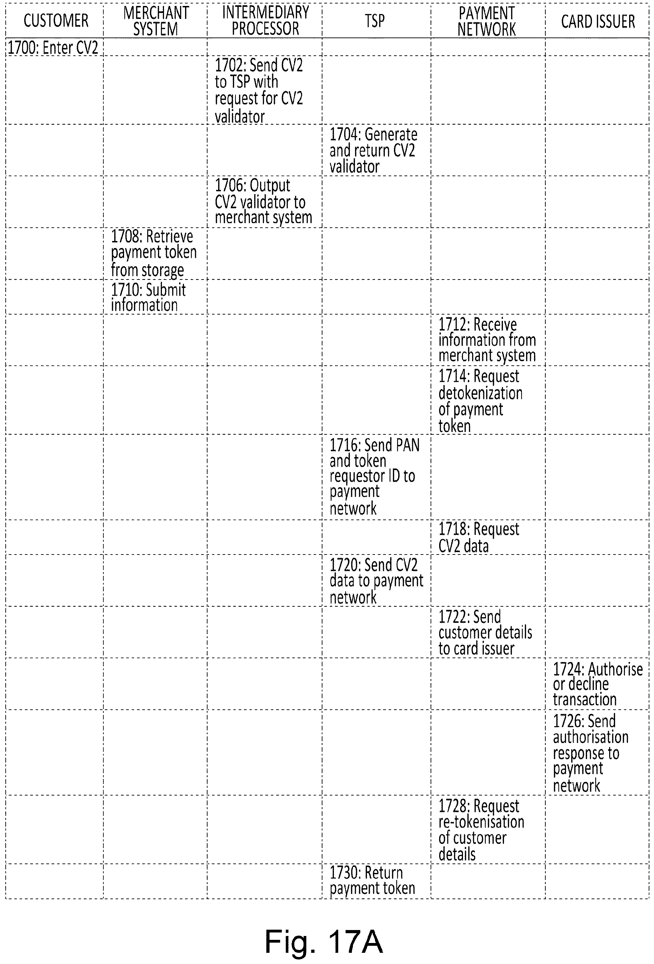

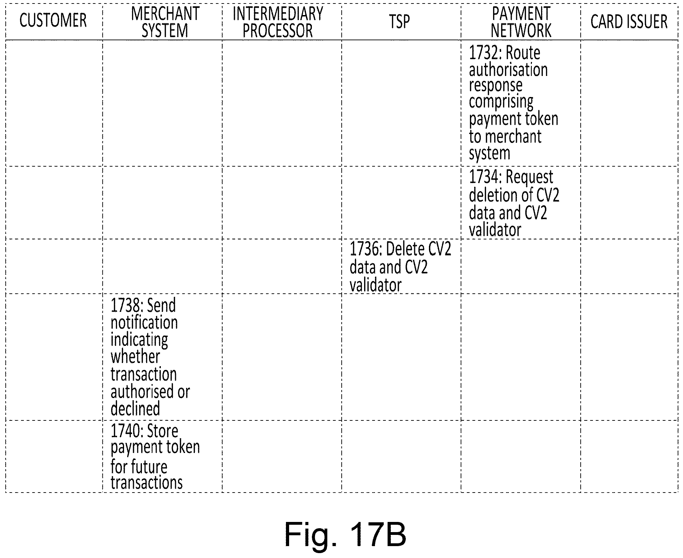

In steps 1624 to 1628 of Figure 16A and steps 1630 to 1640 of Figure 16B, the transaction proceeds as in steps 1434 to 1450 of Figure 14B. In step 1642, the payment token is stored within the contact centre for future transactions, if appropriate. Figures 17A and 17B relate to the third aspect of the fifth embodiment of a transaction environment, illustrated in Figure 9, in which a payment token associated with the customer's PAN is stored at the merchant system with which the customer is initiating the transaction. As in Figures 16A and 16B, storage of the payment token within the merchant system enables the customer to initiate repeat transactions without providing their PAN and card expiry date. The TSP storing the payment token has the same capabilities as that described in Figures 16A and 16B.

The first part of the method is shown in Figure 17A. In steps 1700 to 1706, the transaction proceeds as in steps 1510 to 1516 of Figure 15A.

In step 1708, the payment token is retrieved from storage at the merchant system. In step 1710, the merchant system submits the retrieved information and CV2 validator output by the intermediary processor. In steps 1712 to 1730 of Figure 17A and steps 1732 to 1736 of Figure 17B, the transaction proceeds as in steps 1614 to 1628 of Figure 16A and steps 1634 to 1638 of Figure 16B.

In step 1738, the merchant system sends a notification to the customer indicating whether the transaction has been authorised or declined. In step 1740, the payment token is stored within the merchant system for future transactions, if appropriate.

Figures 12A and 12B, 14A and 14B, and 16A and 16B are equally applicable to the first to fourth embodiments of contact centre environments, illustrated in Figures 3 to 6, respectively. Further, Figures 13A and 13B, 15A and 15B, and 17A and 17B are equally applicable to the fifth and sixth embodiments of transaction environments, illustrated in Figures 9 and 10, respectively.

### Alternative embodiments

In the first to sixth embodiments and associated exemplary processes, illustrated in Figures 3 to 6, 9 and 10, and 12A to 17B, the TSP is indicated as having a communications link with a payment network which enables the payment network to detokenize a payment token. In alternative environments, any entity 'downstream' from the contact centre or merchant centre may have a communications link with a TSP to enable detokenization of the payment token. For example, this capability may be provided by a PSP, an acquirer, or a card issuer, or any separate entity not illustrated in the aforementioned figures.

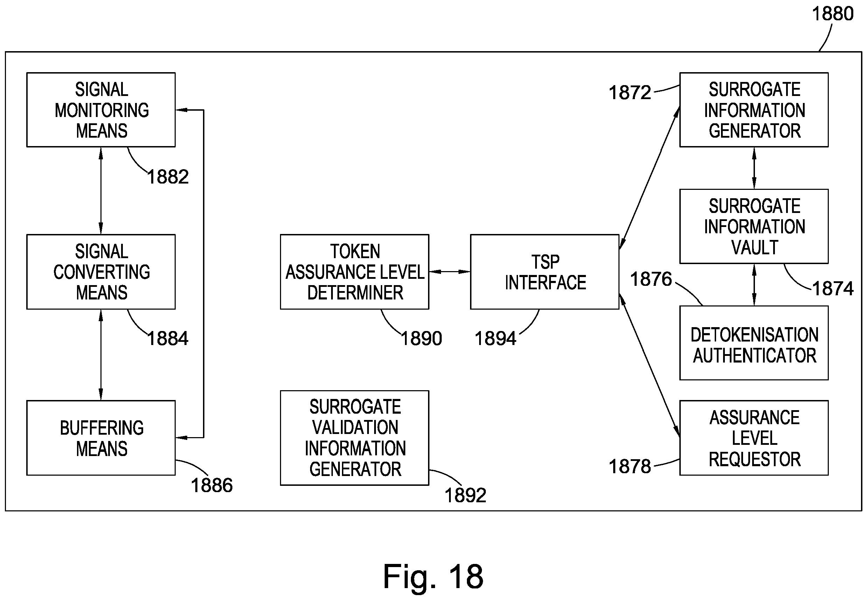

Alternatively, in a seventh embodiment, the TSP may be located at, or comprised within, the call processor. This embodiment is shown in Figure 18 and comprises all components of the call processor described above with respect to Figure 7. In addition, the call processor 1880 comprises a surrogate information vault 1874, a surrogate information generator 1872, a detokenization authenticator 1876 and an assurance level requestor 1878. The surrogate information generator 1872 is operable to generate a token in response to sensitive information being passed via the TSP interface 1894. The generated token is stored, along with the sensitive customer information, in the surrogate information vault 1874, for subsequent use. In addition, the surrogate information generator 1872 may be operable to generate a CV2 validator in response to CV2 data being passed via the TSP interface 1894, and the surrogate information vault 1874 may be operable to store the generated CV2 validator along with the CV2 data to which it corresponds. Further, the surrogate information generator 1872 may be operable to verify that any generated CV2 validator satisfies the necessary formatting requirements. The surrogate information generator 1872 is further operable to pass the generated token and CV2 validator, via the TSP interface 1894, to the signal converting means 1884.

Alternatively, the surrogate information generator 1872 may not have the capability for CV2 validator generation and the surrogate information vault 1874 may not have the capability for CV2 validator storage. In this case, the surrogate information generator 1872 passes only the generated token, via the TSP interface 1894, to the signal converting means 1884. Further, the assurance level requestor 1878 may be operable to request an updated token assurance level from a card issuer on the basis of CV2 information received from the TSP interface 1894 and send the updated token assurance level via the TSP interface 1894.

After the surrogate information has passed through the contact centre, any entity may request detokenization of the payment token. The surrogate information vault 1874 may further be operable to store details of entities authorised to request detokenization of the protected information. Upon detokenization, the surrogate information generator 1872 may further be operable to validate the CV2 validator received from the payment network against the CV2 validator stored in the surrogate information vault 1872.

The entity requesting detokenization may receive the sensitive customer information from the call processor 1880 on the condition that the entity is authorised to do so. The detokenization authenticator 1876 may compare credentials received from the entity with those stored in the token vault and may send the sensitive customer information to that entity if the authorisation criteria are met.

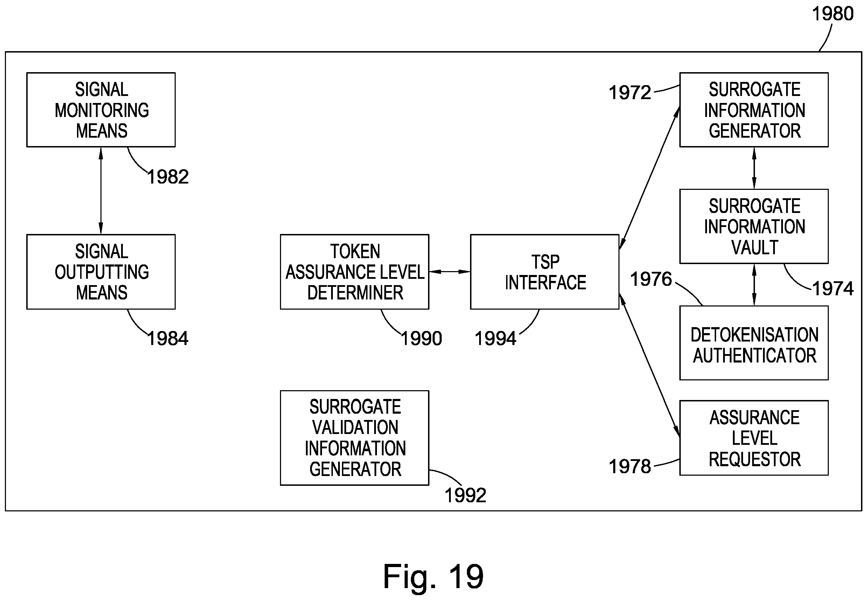

An eighth embodiment of the present invention is illustrated in Figure 19. The intermediary processor 1980 is equivalent to the intermediary processor described above in the seventh embodiment, illustrated in Figure 18, but intended for use in a web-based transaction. Components of the intermediary processor 1980 have identical functionality to the call processor in the seventh embodiment, shown in Figure 18, except that the surrogate information generator 1972 passes the generated surrogate information, via the TSP interface 1994, to the signal outputting means 1984.

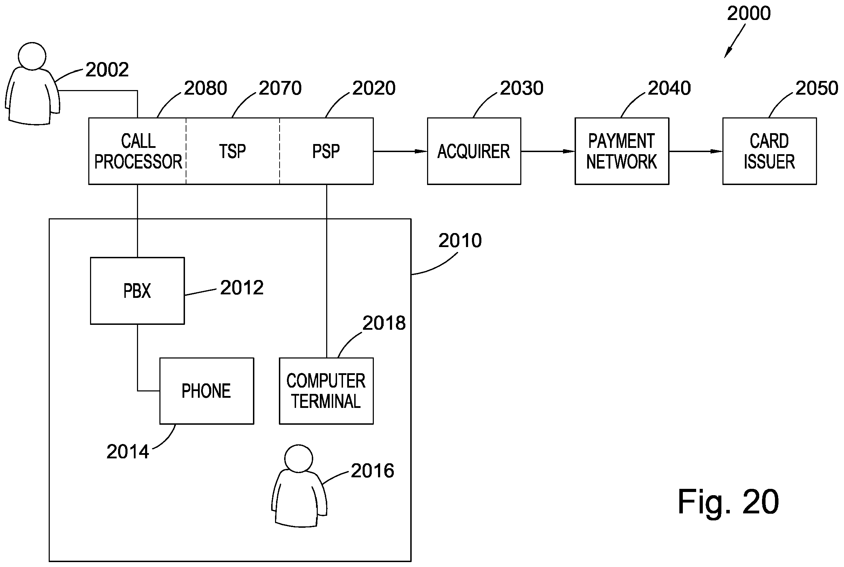

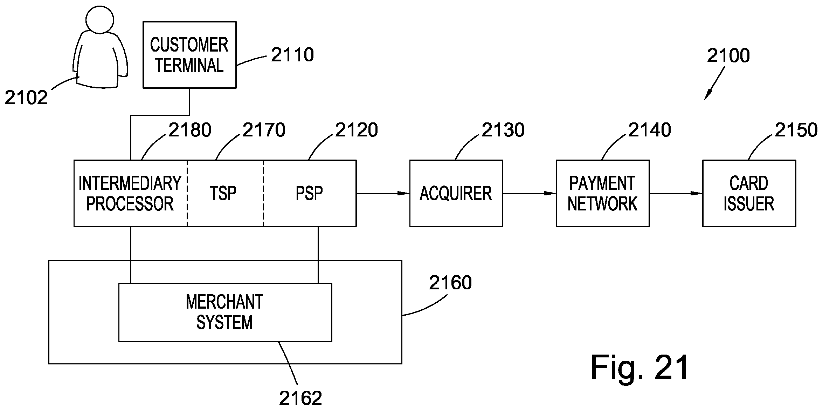

Figure 20 shows a ninth embodiment of the present invention. As a further alternative to the embodiments described above, the call processor 2080 may comprise the TSP 2070 and the PSP 2020. In this embodiment, the PSP 2020 is the entity which requests detokenization and subsequent re-tokenisation. The call processor 2080 may be operable to monitor all incoming signals to and outgoing signals from the contact centre 2010. The call processor 2080 may further be operable to forward protected information from the contact centre 2010 to an acquirer 2030, and collect and streamline payments originating from the acquirer 2030 on behalf of the contact centre 2010. Figure 21 shows a tenth embodiment of the present invention, and illustrates the equivalent embodiment for an intermediary processor 2180. In this embodiment, the intermediary processor 2180 comprises the TSP 2170 and PSP 2120 and is operable to monitor all incoming signals to and outgoing signals from the merchant system 2162.

The invention has been described above with reference to specific embodiments. Persons skilled in the art, however, will understand that various modifications and changes may be made thereto without departing from the broader scope of the invention as set forth in the appended claims. The foregoing description and drawings are, accordingly, to be regarded in an illustrative rather than a restrictive sense.

## Claims

1. A method of processing signals in a payment transaction, the method comprising:
at a processor:
receiving telephonic signals conveying sensitive and non-sensitive information;
detecting sensitive information conveyed by the received telephonic signals;
sending the sensitive information to a token service provider, the token service provider being communicatively coupled to a payment transaction entity, wherein the token service provider is configured to generate surrogate information for the sensitive information;
receiving surrogate information from the token service provider, the surrogate information having been generated by the token service provider; and
outputting the received surrogate information to a transaction handling centre such that the sensitive information is not provided to the transaction handling centre;
at the transaction handling centre:
including the surrogate information in a transaction request message; and
sending the transaction request message to the payment transaction entity; and
at the payment transaction entity:
sending the surrogate information comprised within the transaction request message to the token service provider; and
receiving the sensitive information for use in the payment transaction, the sensitive information having been retrieved by the token service provider upon receipt of the surrogate information.

2. The method of processing signals according to claim 1:
wherein detecting sensitive information conveyed by the received telephonic signals comprises detecting a predetermined pattern of DTMF tones; or
wherein detecting sensitive information conveyed by the received telephonic signals comprises detecting spoken text; or
wherein detecting sensitive information conveyed by the received telephonic signals comprises detecting data received at the processor from an application running on a mobile phone; or
wherein detecting sensitive information conveyed by the received telephonic signals comprises detecting data received at the processor from an authorised third party application.

3. The method of processing signals according to claim 1 or claim 2, wherein the surrogate information complies with the same validation requirements as the sensitive information.

4. The method of processing signals according to any of claims 1 to 3, wherein outputting the received surrogate information to the transaction handling centre comprises converting the surrogate information to a suitable format for output to the transaction handling centre.

5. The method of processing signals according to claim 4:
wherein outputting the received surrogate information to the transaction handling centre further comprises sending the surrogate information in the suitable format to a telephone of an agent located within the transaction handling centre; and
wherein the suitable format comprises DTMF tones or spoken text.

6. The method of processing signals according to claim 4 or claim 5, wherein outputting the received surrogate information to the transaction handling centre further comprises outputting the surrogate information in the suitable format to the computer terminal of an agent located within the transaction handling centre.

7. The method of processing signals according to claim 5:
wherein including the surrogate information in the transaction request message comprises converting the surrogate information in the suitable format to numeric data and outputting the numeric data to the transaction request message; or
wherein including the surrogate information in the transaction request message comprises the agent manually inputting the surrogate information in the suitable format as numeric data to the transaction request message.

8. The method of processing signals according to claim 4, wherein including the surrogate information in the transaction request message comprises using an interactive voice recognition system to output the surrogate information in the suitable format to the transaction request message.

9. The method of processing signals according to any of claims 1 to 8, further comprising redirecting telephonic signals for the transaction handling centre to the processor.

10. A method of processing signals in a payment transaction, the signals originating from a customer device and being addressed to a transaction handling centre, the method comprising:
redirecting signals originating from the customer device to an address of a processor, the signals conveying sensitive and non-sensitive information;
at the processor:
receiving the redirected signals;
detecting sensitive information conveyed by the received signals;
sending the sensitive information to a token service provider, the token service provider being communicatively coupled to a payment transaction entity, wherein the token service provider is configured to generate surrogate information for the sensitive information;
receiving surrogate information from the token service provider, the surrogate information having been generated by the token service provider; and
outputting the received surrogate information to the transaction handling centre such that the sensitive information is not provided to the transaction handling centre;
at the transaction handling centre:
including the surrogate information in a transaction request message; and
sending the transaction request message to the payment transaction entity; and
at the payment transaction entity:
sending the surrogate information comprised within the transaction request message to the token service provider; and
receiving the sensitive information for use in the payment transaction, the sensitive information having been retrieved by the token service provider upon receipt of the surrogate information.

11. The method of processing signals according to claim 10:
wherein redirecting the signals originating from the customer device to the address of the processor comprises updating, by the transaction handling centre, an IP address of the transaction handling centre to an IP address of the processor; or
wherein redirecting the signals originating from the customer device to the address of the processor comprises updating, by the transaction handling centre, an IP address of a subdomain associated with the transaction handling centre to the IP address of the processor; or
wherein redirecting the signals originating from the customer device to the address of the processor comprises modifying, by the transaction handling centre, a URL associated with the transaction handling centre to a URL associated with the processor.

12. The method of processing signals according to any of claims 1 to 11, wherein receiving the surrogate information from the token service provider further comprises receiving an assurance level associated with the surrogate information, the assurance level comprising a confidence level for authentication of a customer, the method further comprising:
at the processor:
receiving validation information;
sending the validation information to the token service provider along with a request for the assurance level to be updated; and
receiving an updated assurance level from the token service provider, the updated assurance level having been calculated on the basis of the validation information.

13. The method of processing signals according to claim 12, further comprising:
at the processor:
generating surrogate validation information, the surrogate validation information having the same format as the validation information; and
outputting the surrogate validation information to the transaction handling centre such that the validation information is not provided to the transaction handling centre.

14. The method of processing signals according to claim 13, further comprising:
at the payment transaction entity:
receiving the updated assurance level from the token service provider;
sending an indicator to the card issuer that authentication of the customer has been completed.

15. The method of processing signals according to any of claims 1 to 11, further comprising:
at the processor:
receiving validation information;
sending the validation information to the token service provider, wherein the token service provider is configured to generate surrogate validation information for the validation information;
receiving surrogate validation information from the token service provider, the surrogate validation information having been generated by the token service provider; and
outputting the received surrogate validation information to the transaction handling centre such that the validation information is not provided to the transaction handling centre;
at the transaction handling centre:
including the surrogate validation information in the transaction request message; and
at the payment transaction entity:
sending the surrogate validation information comprised within the transaction request message to the token service provider; and
receiving the validation information for use in the payment transaction, the validation information having been retrieved by the token service provider upon receipt of the surrogate validation information.

16. The method of processing signals according to any of claims 1 to 11, wherein the sensitive information comprises validation information and the surrogate information comprises surrogate validation information, the method further comprising:
at the transaction handling centre:
retrieving token information from storage, the token information having been generated by the token service provider for sensitive account information in a previous transaction; and
including the token information in the transaction request message; and at the payment transaction entity:
sending the token information comprised within the transaction request message to the token service provider; and
receiving the sensitive account information for use in the payment transaction, the sensitive account information having been retrieved by the token service provider upon receipt of the token information.

17. The method of processing signals according to any of claims 1 to 16, wherein the payment transaction entity is a payment service provider and wherein the processor comprises the payment service provider.

18. The method of processing signals according to any of claims 1 to 17, wherein the processor comprises the token service provider.

19. A processor for processing signals in a payment transaction, comprising:
signal monitoring means operable to:
receive telephonic signals conveying sensitive and non-sensitive information; and
detect sensitive information conveyed by the received telephonic signals;
a token service provider interface operable to:
send the sensitive information to a token service provider, the token service provider being communicatively coupled to a payment transaction entity and configured to generate surrogate information for the sensitive information; and
receive surrogate information from the token service provider, the surrogate information having been generated by the token service provider; and
signal outputting means operable to output the received surrogate information to a transaction handing centre such that the sensitive information is not provided to the transaction handling centre, the transaction handling centre being operable to include the surrogate information in a transaction request message and send the transaction request message to the payment transaction entity, the payment transaction entity being operable to send the surrogate information comprised within the transaction request message to the token service provider and receive the sensitive information for use in the payment transaction, the sensitive information having been retrieved by the token service provider upon receipt of the surrogate information.

20. The processor for processing signals according to claim 19, wherein the signal monitoring means is operable to detect a predetermined pattern of DTMF tones conveyed by the received telephonic signals; or
wherein the signal monitoring means is operable to detect spoken text conveyed by the received telephonic signals; or
wherein the signal monitoring means is operable to detect data from an application running on a mobile phone conveyed by the received telephonic signals; or
wherein the signal monitoring means is operable to receive and detect data from an authorised third party application conveyed by the received telephonic signals.

21. The processor for processing signals according to claim 19 or claim 20, wherein the surrogate information received by the token service provider interface complies with the same validation requirements as the sensitive information detected by the signal monitoring means.

22. The processor for processing signals according to any of claims 19 to 21, further comprising signal converting means operable to convert the received surrogate information to a suitable format for output to the transaction handling centre.

23. The processor for processing signals according to claim 22, wherein:
the signal outputting means is further operable to send the surrogate information in the suitable format to a telephone of an agent located within the transaction handling centre; and
wherein the suitable format comprises DTMF tones or spoken text.

24. The processor for processing signals according to claim 22 or claim 23, wherein the signal outputting means is further operable to output the surrogate information in the suitable format to the computer terminal of an agent located within the transaction handling centre.

25. The processor for processing signals according to any of claims 19 to 24, wherein the telephonic signals are received by the signal monitoring means following redirection of the telephonic signals to the processor, the telephonic signals having previously been for the transaction handling centre.

26. A processor for processing signals in a payment transaction, the signals originating from a customer device and being addressed to a transaction handling centre, the processor comprising:
signal monitoring means operable to:
receive signals originating from the customer device and having been redirected to an address of the processor prior to receipt, the signals conveying sensitive and non-sensitive information; and
detect sensitive information conveyed by the received signals;
a token service provider interface operable to:
send the sensitive information to a token service provider, the token service provider being communicatively coupled to a payment transaction entity and configured to generate surrogate information for the sensitive information; and
receive surrogate information from the token service provider, the surrogate information having been generated by the token service provider; and
signal outputting means operable to output the received surrogate information to the transaction handing centre such that the sensitive information is not provided to the transaction handling centre, the transaction handling centre being operable to include the surrogate information in a transaction request message and send the transaction request message to the payment transaction entity, the payment transaction entity being operable to send the surrogate information comprised within the transaction request message to the token service provider and receive the sensitive information for use in the payment transaction, the sensitive information having been retrieved by the token service provider upon receipt of the surrogate information.

27. The processor for processing signals according to any of claims 19 to 26, wherein:
the token service provider interface is further operable to receive an assurance level from the token service provider, the assurance level being associated with the surrogate information and comprising a confidence level for authentication of a customer;
the signal monitoring means is further operable to receive validation information; and
the token service provider interface is further operable to:
send the validation information to the token service provider along with a request for the assurance level to be updated; and
receive an updated assurance level from the token service provider, the updated assurance level having been calculated on the basis of the validation information.

28. The processor for processing signals according to claim 27, wherein:
the processor further comprises a surrogate validation information generator operable to generate surrogate validation information having the same format as the validation information; and
the signal outputting means is further operable to output the surrogate validation information to the transaction handling centre such that the validation information is not provided to the transaction handling centre.

29. The processor for processing signals according to any of claims 19 to 26, wherein:
the signal monitoring means is further operable to receive validation information;
the token service provider interface is further operable to:
send the validation information to the token service provider, the token service provider being configured to generate surrogate validation information for the validation information; and
receive surrogate validation information from the token service provider, the surrogate validation information having been generated by the token service provider; and
the signal outputting means is further operable to output the received surrogate validation information to the transaction handling centre such that the validation information is not provided to the transaction handling centre, the transaction handling centre being operable to include the surrogate validation information in the transaction request message and the payment transaction entity being operable to send the surrogate validation information comprised within the transaction request message to the token service provider and receive the validation information for use in the payment transaction, the validation information having been retrieved by the token service provider upon receipt of the surrogate validation information.

30. The processor for processing signals according to any of claims 19 to 26, wherein the sensitive information detected by the signal monitoring means comprises validation information and the surrogate information received by the token service provider interface comprises surrogate validation information:
the transaction handling centre being operable to retrieve token information from storage and include the token information in the transaction request message, the token information having been generated by the token service provider for sensitive account information in a previous transaction; and
the payment transaction entity being operable to send the token information comprised within the transaction request message to the token service provider and receive the sensitive account information for use in the payment transaction, the sensitive account information having been retrieved by the token service provider upon receipt of the token information.

31. The processor for processing signals according to any of claims 19 to 30, the payment transaction entity being a payment service provider and the processor comprising the payment service provider.

32. The processor for processing signals according to any of claims 19 to 31, the processor comprising the token service provider.

33. The processor for processing signals according to claim 32, further comprising:
a surrogate information generator operable to:
generate surrogate information for sensitive information received from the token service provider interface; and
send the generated surrogate information to the token service provider interface;
a surrogate information vault operable to store the generated surrogate information, the sensitive information and information identifying the payment transaction entity;
an assurance level requestor operable to:
request an updated assurance level from a card issuer;
receive the updated assurance level from the card issuer; and
send the updated assurance level to the token service provider interface; and
a detokenization authenticator operable to:
verify credentials of an entity providing the surrogate information and requesting the sensitive information by comparing the credentials against the information identifying the payment transaction entity; and
upon determining that the credentials match the information identifying the payment transaction entity, provide the sensitive information to the payment transaction entity.

34. The processor for processing signals according to claim 32, further comprising:
a surrogate information generator operable to:
generate surrogate information and surrogate validation information for, respectively, sensitive information and validation information received from the token service provider interface; and
send the generated surrogate information and surrogate validation information to the token service provider interface;
a surrogate information vault operable to:
store the generated surrogate information, the sensitive information and information identifying the payment transaction entity; and
store the generated surrogate validation information and validation information; and
a detokenization authenticator operable to:
verify credentials of an entity providing the surrogate information and surrogate validation information and requesting the sensitive information and validation information by comparing the credentials against the information identifying the payment transaction entity; and
upon determining that the credentials match the information identifying the payment transaction entity, provide the sensitive information and the validation information to the payment transaction entity.
